# EUROPEAN PATENT APPLICATION

(11) **EP 4 836 491 A1**
(43) Date of publication of application: **04.11.2026**
(21) Application number: 24910774.9
(22) Date of filing: 13.12.2024
(51) Int. Cl.: H04W 24/02

(54) **COMMUNICATION METHOD AND COMMUNICATION APPARATUS**

(30) Priority: 29.12.2023 CN 202311863068
(71) Applicant: Huawei Technologies Co., Ltd., Shenzhen, Guangdong 518129 (CN)
(72) Inventor: ZHANG, Jintao, Shenzhen, Guangdong 518129 (CN); LIU, Fengwei, Shenzhen, Guangdong 518129 (CN)
(74) Representative: MERH-IP Matias Erny Reichl Hoffmann Patentanwälte PartG mbB
(86) International application number: PCT/CN2024/139092
(87) International publication number: WO 2025/139843

(57) **Abstract**

A communication method and a communication apparatus are provided. In the method, a network device performs port dimension reduction based on a dimension reduction model to enable measurement of an equivalent downlink channel, and a terminal device feeds back, to the network device, a compressed feedback quantity of equivalent channel information obtained based on a compression model that matches the dimension reduction model. Then the network device obtains equivalent downlink channel information reconstructed from the compressed feedback quantity based on a reconstruction model that matches the dimension reduction model. In the method, the dimension reduction model, the compression model, and the reconstruction model are models that match one another after joint training. The method can improve compressibility of the equivalent channel information and further reduce feedback overheads. Models involved in this application may be AI models, neural network models, machine learning models, and the like.

## Description

This application claims priority to Chinese Patent Application No. 202311863068.8, filed with the China National Intellectual Property Administration on December 29, 2023, and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In a communication system, a network device may perform port dimension reduction, so that equivalent downlink channels of multiple physical antennas can be measured by using only a limited quantity of downlink reference signals. A terminal device measures received downlink reference signals to obtain downlink channel information, performs compression processing on the obtained downlink channel information based on an artificial intelligence (artificial intelligence, AI) model, and then feeds back the compressed information to the network device by using uplink control information (uplink control information, UCI). Currently, a dimension reduction weight used for port dimension reduction may be computed by using an orthogonal codebook or orthogonal decomposition. However, research shows that equivalent channel information measured based on such a dimension reduction weight exhibits poor compressibility. Therefore, how to further reduce feedback overheads becomes an urgent problem to be resolved.

### SUMMARY

This application provides a communication method and a communication apparatus, to further reduce downlink channel information feedback overheads.

According to a first aspect, a communication method is provided. The method may be performed by a network device, or may be performed by a component (for example, a chip or a circuit) of a network device. This is not limited.

The method includes: performing, based on a dimension reduction weight, digital precoding on M reference signals corresponding to M antenna ports, where the dimension reduction weight is used to measure an equivalent downlink channel of N physical antennas by using the M reference signals, N is a positive integer, M is a positive integer less than N, and the dimension reduction weight is determined based on a dimension reduction model; sending the M reference signals; sending first indication information, where the first indication information indicates a compression model, and the compression model matches the dimension reduction model; receiving a first sequence, where the first sequence is a compressed feedback quantity obtained by using first downlink channel information as an input to the compression model, and the first downlink channel information is obtained by measuring the M reference signals; and obtaining second downlink channel information, where the second downlink channel information is information obtained by using the first sequence as an input to a reconstruction model, the reconstruction model matches the dimension reduction model, and the second downlink channel information is used to determine downlink channel information of the N physical antennas.

It may be understood that an optimization objective of a current dimension reduction method is to minimize only an energy loss of an equivalent channel after dimension reduction. In the method, compressibility of the channel after dimension reduction is not considered. However, in this application, the dimension reduction model and the compression model are mutually matched models. In other words, the dimension reduction method and the compression method in this application are jointly optimized, and compressibility of the channel after dimension reduction is further considered while port dimension reduction is implemented. Therefore, compared with a current downlink channel information feedback solution, the foregoing technical solution can achieve higher compressibility of equivalent downlink channel information, thereby reducing feedback overheads.

In some implementations of the first aspect, the method further includes: inputting the first sequence into the reconstruction model for decompression, to obtain the second downlink channel information.

According to a second aspect, a communication method is provided. The method may be performed by a terminal device, or may be performed by a component (for example, a chip or a circuit) of a terminal device. This is not limited.

The method includes: receiving M reference signals corresponding to M antenna ports, where M is a positive integer; obtaining first downlink channel information based on the M reference signals; receiving first indication information, where the first indication information indicates a compression model, the compression model matches a dimension reduction model, the dimension reduction model is used to obtain a dimension reduction weight, the dimension reduction weight is used to measure an equivalent downlink channel of N physical antennas by using the M reference signals, N is a positive integer, and M is a positive integer less than N; and sending a first sequence, where the first sequence is a compressed feedback quantity obtained by using the first downlink channel information as an input to the compression model, the first sequence is used as an input to a reconstruction model and decompressed to obtain second downlink channel information, the reconstruction model matches the dimension reduction model, and the second downlink channel information is used to determine downlink channel information of the N physical antennas.

For beneficial effects of the second aspect, refer to the descriptions in the first aspect. Details are not described herein again.

In some implementations of the first aspect or the second aspect, the method further includes: inputting the first downlink channel information into the compression model for compression, to obtain the first sequence.

In some implementations of the first aspect or the second aspect, the dimension reduction weight is output information obtained by using channel prior information as an input to the dimension reduction model.

In some implementations of the first aspect or the second aspect, the channel prior information is determined based on at least one of the following: currently measured uplink channel information, historical uplink channel information, historical downlink channel information, or sensed channel information.

In some implementations of the first aspect or the second aspect, the dimension reduction model, the compression model, and the reconstruction model are all related to an antenna port quantity M, a physical antenna quantity N, and the channel prior information.

In some implementations of the first aspect or the second aspect, the first downlink channel information indicates an equivalent downlink channel response, and the first sequence is a compressed feedback quantity of the equivalent downlink channel response.

In some implementations of the first aspect or the second aspect, the first downlink channel information indicates a precoding matrix corresponding to the equivalent downlink channel response, and the first sequence is a compressed feedback quantity of precoding matrix information corresponding to the equivalent downlink channel response.

In some implementations of the first aspect or the second aspect, the downlink channel information of the N physical antennas includes a downlink precoding matrix of the N physical antennas and a downlink channel response of the N physical antennas.

In some implementations of the first aspect, the method includes: obtaining the downlink precoding matrix of the N physical antennas, where the downlink precoding matrix of the N physical antennas is determined based on the dimension reduction weight and the second downlink channel information.

According to a third aspect, a communication method is provided. The method may be performed by a first device, or may be performed by a component (for example, a chip or a circuit) of a first device. This is not limited. For example, the first device may be a network device or an AI network element #1, for example, a third-party network element #1.

The method includes: obtaining a dimension reduction weight based on a dimension reduction model, where the dimension reduction weight is used for digital precoding on M reference signals corresponding to M antenna ports to measure an equivalent downlink channel of N physical antennas, N is a positive integer, and M is a positive integer less than N; inputting a first sequence into a reconstruction model, where the first sequence is a compressed feedback quantity obtained by using first downlink channel information as an input to a compression model, the first downlink channel information is obtained by measuring the M reference signals, and the compression model, the reconstruction model, and the dimension reduction model match one another; and outputting second downlink channel information, where the second downlink channel information is used to determine downlink channel information of the N physical antennas.

In the foregoing technical solution, the dimension reduction model, the compression model, and the reconstruction model are mutually matched models after joint training. This method can improve compressibility of equivalent downlink channel information, and reduce feedback overheads.

According to a fourth aspect, a communication method is provided. The method may be performed by a second device, or may be performed by a component (for example, a chip or a circuit) of a second device. This is not limited. For example, the second device may be a terminal device or an AI network element #2, for example, a third-party network element #2.

The method includes: inputting first downlink channel information into a compression model, where the first downlink channel information is obtained by measuring M reference signals, the M reference signals are reference signals obtained by performing, based on a dimension reduction weight, digital precoding on reference signals corresponding to M antenna ports, the dimension reduction weight is used to measure an equivalent downlink channel of N physical antennas by using the M reference signals, N is a positive integer, M is a positive integer less than N, the dimension reduction weight is determined based on a dimension reduction model, and the compression model matches the dimension reduction model; and outputting a first sequence, where the first sequence is used as an input to a reconstruction model and is decompressed to obtain second downlink channel information, the reconstruction model is associated with the dimension reduction model, the second downlink channel information is used to determine downlink channel information of the N physical antennas, and the reconstruction model is related to the dimension reduction model.

For beneficial effects of the fourth aspect, refer to the descriptions in the third aspect. Details are not described herein again.

In some implementations of the third aspect or the fourth aspect, the dimension reduction weight is output information obtained by using channel prior information as an input to the dimension reduction model.

In some implementations of the third aspect or the fourth aspect, the channel prior information is determined based on at least one of the following: currently measured uplink channel information, historical uplink channel information, historical downlink channel information, or sensed channel information.

In some implementations of the third aspect or the fourth aspect, the dimension reduction model, the compression model, and the reconstruction model are all related to an antenna port quantity M, a physical antenna quantity N, and the channel prior information.

In some implementations of the third aspect or the fourth aspect, the first downlink channel information indicates an equivalent downlink channel response, and the first sequence is a compressed feedback quantity of the equivalent downlink channel response.

In some implementations of the third aspect or the fourth aspect, the first downlink channel information indicates a precoding matrix corresponding to the equivalent downlink channel response, and the first sequence is a compressed feedback quantity of precoding matrix information corresponding to the equivalent downlink channel response.

In some implementations of the third aspect or the fourth aspect, the downlink channel information of the N physical antennas includes a downlink precoding matrix of the N physical antennas and a downlink channel response of the N physical antennas.

According to a fifth aspect, a model training method is provided. The method may be performed by a first device, or may be performed by a component (for example, a chip or a circuit) of a first device. This is not limited. For example, the first device may be a network device or an AI network element #1, for example, a third-party network element #1.

The method includes: obtaining a training dataset, where the training dataset includes channel prior information and first downlink channel information, the first downlink channel information is real downlink channel information of N physical antennas, and N is a positive integer; sending second downlink channel information, where the second downlink channel information is determined based on the first downlink channel information and a dimension reduction weight, the dimension reduction weight is output information obtained by using the channel prior information as an input to a dimension reduction model, the dimension reduction weight is used for digital precoding on M reference signals corresponding to M antenna ports to measure an equivalent downlink channel of the N physical antennas, and M is a positive integer less than N; receiving a first sequence, where the first sequence is output information obtained by using the second downlink channel information as an input to a compression model; sending first gradient information, where the first gradient information is gradient information at an input side of a reconstruction model, the first gradient information is used to update a network parameter of the compression model, the first gradient information is determined based on first error information and the reconstruction model, the first error information is determined based on third downlink channel information and the first downlink channel information, and the third downlink channel information is output information obtained by using the first sequence as an input to the reconstruction model or is computed based on output information of the reconstruction model; receiving second gradient information, where the second gradient information is gradient information at an input side of the compression model, and the second gradient information is determined based on the first gradient information and the compression model; and updating a model parameter of the reconstruction model based on the first error information, and updating a model parameter of the dimension reduction model based on the second gradient information.

A current model training method supports only training of two models on two sides, but the foregoing technical solution can support joint training of multiple models on two sides. Based on the method in the foregoing technical solution, joint training and optimization can be performed on the three models: the dimension reduction model, the compression model, and the reconstruction model, so that channel information feedback overheads can be reduced.

In some implementations of the fifth aspect, when a termination condition of model training is met, model training is terminated. For example, the termination condition of model training may be as follows: An error indicated by the first error information is less than or equal to a first threshold, or a quantity of model training rounds is equal to a second threshold.

According to a sixth aspect, a model training method is provided. The method may be performed by a second device, or may be performed by a component (for example, a chip or a circuit) of a second device. This is not limited. For example, the second device may be a terminal device or an AI network element #2, for example, a third-party network element #2.

The method includes: receiving second downlink channel information, where the second downlink channel information is determined based on first downlink channel information and a dimension reduction weight, the first downlink channel information is real downlink channel information of N physical antennas, the dimension reduction weight is output information obtained by using channel prior information as an input to a dimension reduction model, the dimension reduction weight is used for digital precoding on M reference signals corresponding to M antenna ports to measure an equivalent downlink channel of the N physical antennas, N is a positive integer, M is a positive integer less than N, and the first downlink channel information and the channel prior information constitute a training dataset used for model training; sending a first sequence, where the first sequence is output information obtained by using the second downlink channel information as an input to a compression model; receiving first gradient information, where the first gradient information is gradient information at an input side of a reconstruction model, the first gradient information is used to update a model parameter of the compression model, the first gradient information is determined based on first error information and the reconstruction model, the first error information is determined based on third downlink channel information and the first downlink channel information, the third downlink channel information is output information obtained by using the first sequence as an input to the reconstruction model or is computed based on output information of the reconstruction model, and the first error information is used to update a model parameter of the reconstruction model; sending second gradient information, where the second gradient information is gradient information at an input side of the compression model, and the second gradient information is determined based on the first gradient information and the compression model; and updating the model parameter of the compression model based on the first gradient information.

For beneficial effects of the sixth aspect, refer to the descriptions in the fifth aspect. Details are not described herein again.

In some implementations of the fifth aspect or the sixth aspect, the channel prior information is determined based on at least one of the following: currently measured uplink channel information, historical uplink channel information, historical downlink channel information, or sensed channel information.

In some implementations of the fifth aspect or the sixth aspect, the first downlink channel information is a real downlink channel response of the N physical antennas.

In some implementations of the fifth aspect or the sixth aspect, the second downlink channel information indicates a downlink channel response, and the downlink channel response is determined based on the first downlink channel information and the dimension reduction weight, or the second downlink channel information indicates a weight corresponding to the downlink channel response.

In some implementations of the fifth aspect or the sixth aspect, the third downlink channel information is a reconstructed weight of the N physical antennas, the first error information indicates an error between the third downlink channel information and a real weight of the N physical antennas, and the real weight of the N physical antennas is determined based on the first downlink channel information.

According to a seventh aspect, a model training method is provided. The method may be performed by a first device, or may be performed by a component (for example, a chip or a circuit) of a first device. This is not limited. For example, the first device may be a network device, a terminal device, or an AI network element #1, for example, a third-party network element #1.

The method includes: obtaining a first training dataset, where the first training dataset includes channel prior information and first downlink channel information, the first downlink channel information is real downlink channel information of N physical antennas, and N is a positive integer; performing joint training on a dimension reduction model, a compression model, and a reconstruction model, where an input to the dimension reduction model is the channel prior information, an output of the dimension reduction model is a dimension reduction weight, the dimension reduction weight is used for digital precoding on M reference signals corresponding to M antenna ports to measure an equivalent downlink channel of the N physical antennas, M is a positive integer less than N, an input to the compression model is second downlink channel information, an output of the compression model is a first sequence, the second downlink channel information is determined based on the first downlink channel information and the dimension reduction weight, an input to the reconstruction model is the first sequence, and an output of the reconstruction model is third downlink channel information; and updating parameters of the dimension reduction model, the compression model, and the reconstruction model based on first error information, where the first error information is determined based on the third downlink channel information and the first downlink channel information.

The method in the foregoing technical solution differs from the joint training method in the fifth aspect and the sixth aspect in that three models are jointly trained on a single side (that is, the first device).

In some implementations of the seventh aspect, when a termination condition of model training is met, model training is terminated. For example, the termination condition of model training may be as follows: An error indicated by the first error information is less than or equal to a first threshold, or a quantity of model training rounds is equal to a second threshold.

According to an eighth aspect, a model training method is provided. The method may be performed by a second device, or may be performed by a component (for example, a chip or a circuit) of a second device. This is not limited. The second device may be a device different from the first device. For example, the second device may be a network device, a terminal device, or an AI network element #2, for example, a third-party network element #2.

The method includes: receiving a second training dataset, where the second training dataset includes output information of a dimension reduction model and output information of a compression model, both obtained by reusing a first training dataset after joint training of the dimension reduction model, the compression model, and a reconstruction model based on the first training dataset is completed, and the first training dataset includes channel prior information and first downlink channel information. In a round of joint training corresponding to the dimension reduction model, the compression model, and the reconstruction model, an input to the dimension reduction model is the channel prior information, an output of the dimension reduction model is a dimension reduction weight, the dimension reduction weight is used for digital precoding on M reference signals corresponding to M antenna ports to measure an equivalent downlink channel of N physical antennas, M is a positive integer less than N, an input to the compression model is second downlink channel information, an output of the compression model is a first sequence, the second downlink channel information is determined based on the first downlink channel information and the dimension reduction weight, an input to the reconstruction model is the first sequence, and an output of the reconstruction model is third downlink channel information; and training a first model based on the second training dataset to obtain a second model.

In some implementations of the seventh aspect or the eighth aspect, the method further includes: sending a corresponding compression model obtained after model training is completed; or sending the second training dataset, where the second training dataset includes the output information of the dimension reduction model and the output information of the compression model, both obtained by reusing the first training dataset after model training is completed.

In the foregoing technical solution, if a model A in the three models is to be deployed on another device side (for example, a second device side), the first device may send the trained model A or a training dataset corresponding to the model A to the second device, and the second device completes model deployment or performs further training based on the received model A or training dataset.

In some implementations of the seventh aspect or the eighth aspect, the channel prior information is determined based on at least one of the following: currently measured uplink channel information, historical uplink channel information, historical downlink channel information, or sensed channel information.

In some implementations of the seventh aspect or the eighth aspect, the first downlink channel information is a real downlink channel response of the N physical antennas.

In some implementations of the seventh aspect or the eighth aspect, the second downlink channel information indicates a downlink channel response, and the downlink channel response is determined based on the first downlink channel information and the dimension reduction weight, or the second downlink channel information indicates a weight corresponding to the downlink channel response.

In some implementations of the seventh aspect or the eighth aspect, the third downlink channel information is a reconstructed weight of the N physical antennas, the first error information indicates an error between the third downlink channel information and a real weight of the N physical antennas, and the real weight of the N physical antennas is determined based on the first downlink channel information.

According to a ninth aspect, a communication apparatus is provided. The apparatus is configured to perform the method provided in the first aspect. Specifically, the apparatus may include a unit and/or a module, for example, a processing unit and/or a communication unit, configured to perform the method in any one of the first aspect or the possible implementations of the first aspect.

In an implementation, the apparatus is a network device. When the apparatus is a network device, the communication unit may be a transceiver circuit, and the processing unit may be a processing circuit.

For example, the transceiver circuit may be a transceiver, an input/output interface, or an input/output circuit.

For example, the processing circuit may be one or more processors, or may be all or some circuits of one or more processors.

In another implementation, the apparatus is a chip, a chip system, or a circuit used in a network device. When the apparatus is a chip, a chip system, or a circuit used in a network device, the communication unit may be a transceiver circuit on the chip, the chip system, or the circuit, and the processing unit may be a processing circuit.

For example, the transceiver circuit may be a transceiver, an input/output interface, an input/output circuit, a pin, or a related circuit.

For example, the processing circuit may be a logic circuit or a processor.

According to a tenth aspect, a communication apparatus is provided. The apparatus is configured to perform the method provided in the second aspect. Specifically, the apparatus may include a unit and/or a module, for example, a processing unit and/or a communication unit, configured to perform the method in any one of the second aspect or the possible implementations of the second aspect.

In an implementation, the apparatus is a terminal device. When the apparatus is a terminal device, the communication unit may be a transceiver circuit, and the processing unit may be a processing circuit.

In another implementation, the apparatus is a chip, a chip system, or a circuit used in a terminal device. When the apparatus is a chip, a chip system, or a circuit used in a terminal device, the communication unit may be a transceiver circuit on the chip, the chip system, or the circuit, and the processing unit may be a processing circuit.

For examples of the transceiver circuit and the processing circuit, refer to the description in the ninth aspect. Details are not described again.

According to an eleventh aspect, a communication apparatus is provided. The apparatus is configured to perform the method provided in the third aspect, the fifth aspect, or the seventh aspect. Specifically, the apparatus may include a unit and/or a module, for example, a processing unit and/or a communication unit, configured to perform the method in any one of the third aspect, the fifth aspect, the seventh aspect, or the possible implementations of the third aspect, the fifth aspect, or the seventh aspect.

In an implementation, the apparatus is a first device. When the apparatus is a first device, the communication unit may be a transceiver circuit, and the processing unit may be a processing circuit.

In another implementation, the apparatus is a chip, a chip system, or a circuit used in a first device. When the apparatus is a chip, a chip system, or a circuit used in a first device, the communication unit may be a transceiver circuit on the chip, the chip system, or the circuit, and the processing unit may be a processing circuit.

For examples of the transceiver circuit and the processing circuit, refer to the description in the ninth aspect. Details are not described again.

According to a twelfth aspect, a communication apparatus is provided. The apparatus is configured to perform the method provided in the fourth aspect, the sixth aspect, or the eighth aspect. Specifically, the apparatus may include a unit and/or a module, for example, a processing unit and/or a communication unit, configured to perform the method in any one of the fourth aspect, the sixth aspect, the eighth aspect, or the possible implementations of the fourth aspect, the sixth aspect, or the eighth aspect.

In an implementation, the apparatus is a second device. When the apparatus is a second device, the communication unit may be a transceiver circuit, and the processing unit may be a processing circuit.

In another implementation, the apparatus is a chip, a chip system, or a circuit used in a second device. When the apparatus is a chip, a chip system, or a circuit used in a second device, the communication unit may be a transceiver circuit on the chip, the chip system, or the circuit, and the processing unit may be a processing circuit.

For examples of the transceiver circuit and the processing circuit, refer to the description in the ninth aspect. Details are not described again.

According to a thirteenth aspect, a communication apparatus is provided. The apparatus includes at least one processing circuit, where the at least one processing circuit is coupled to at least one memory, the at least one memory is configured to store a computer program or instructions, and the at least one processing circuit is configured to invoke the computer program or the instructions from the at least one memory and run the computer program or the instructions, so that the communication apparatus performs the method in any one of the first aspect, the third aspect, the fifth aspect, the seventh aspect, or the possible implementations of the first aspect, the third aspect, the fifth aspect, or the seventh aspect.

According to a fourteenth aspect, a communication apparatus is provided. The apparatus includes at least one processing circuit, where the at least one processing circuit is coupled to at least one memory, the at least one memory is configured to store a computer program or instructions, and the at least one processing circuit is configured to invoke the computer program or the instructions from the at least one memory and run the computer program or the instructions, so that the communication apparatus performs the method in any one of the second aspect, the fourth aspect, the sixth aspect, the eighth aspect, or the possible implementations of the second aspect, the fourth aspect, the sixth aspect, or the eighth aspect.

According to a fifteenth aspect, a processing circuit is provided and configured to perform the methods provided in the foregoing aspects.

Operations such as sending and obtaining/receiving related to the processing circuit may be understood as operations such as outputting, receiving, and inputting performed by the processing circuit, or may be understood as sending and receiving operations performed by a radio frequency circuit and an antenna, unless otherwise specified, or provided that the operations do not contradict actual functions or internal logic in related descriptions. This is not limited in this application.

According to a sixteenth aspect, a computer-readable storage medium is provided. The computer-readable storage medium stores program code executed by a device, and the program code is used to perform the method in any one of the first aspect to the eighth aspect or the possible implementations of the first aspect to the eighth aspect.

According to a seventeenth aspect, a computer program product including instructions is provided. When the computer program product is run on a computer, the computer is enabled to perform the method in any one of the first aspect to the eighth aspect or the possible implementations of the first aspect to the eighth aspect.

According to an eighteenth aspect, a chip is provided. The chip includes a processing circuit and a communication interface. The processing circuit reads, through the communication interface, instructions stored in a memory, to perform the method in any one of the first aspect to the eighth aspect or the possible implementations of the first aspect to the eighth aspect.

Optionally, in an implementation, the chip further includes the memory. The memory stores a computer program or instructions. The processing circuit is configured to execute the computer program or the instructions stored in the memory. When the computer program or the instructions are executed, the processing circuit is configured to perform the method in any one of the first aspect to the eighth aspect or the possible implementations of the first aspect to the eighth aspect.

For example, the processing circuit described in the foregoing aspects may be one or more processors, or may be all or some circuits of one or more processors.

According to a nineteenth aspect, a communication system is provided. The communication system includes the communication apparatuses shown in the thirteenth aspect and the fourteenth aspect.

### BRIEF DESCRIPTION OF DRAWINGS

FIG. 1 is a diagram of a possible application framework in a communication system;
FIG. 2 is a diagram of a possible application framework in a communication system;
FIG. 3 is a diagram of a communication system to which an embodiment of this application is applicable;
FIG. 4 is a diagram of another communication system to which an embodiment of this application is applicable;
FIG. 5 is a block diagram of an auto-encoder;
FIG. 6 is a diagram of forward propagation and back propagation of a neural network;
FIG. 7 is a diagram of a CSI feedback procedure;
FIG. 8 is a schematic flowchart of a communication method 800 according to this application;
FIG. 9 is a schematic flowchart of a model training method 900 according to this application;
FIG. 10 is a schematic flowchart of a model training method 1000 according to this application;
FIG. 11 is a diagram illustrating a comparison of corresponding simulation performance between a model-based dimension reduction and compression method according to this application and an existing orthogonal-codebook-based dimension reduction and compression method;
FIG. 12 is a block diagram of a communication apparatus 1200 according to an embodiment of this application; and
FIG. 13 is a block diagram of a communication apparatus 1300 according to an embodiment of this application.

### DESCRIPTION OF EMBODIMENTS

The following describes technical solutions in embodiments of this application with reference to accompanying drawings.

Before embodiments of this application are described, the following several descriptions are first provided.
1. In descriptions of embodiments of this application, unless otherwise specified, "a plurality of" means two or more.
2. In embodiments of this application, unless otherwise specified or there is a logic conflict, terms and/or descriptions in different embodiments are consistent and may be mutually referenced, and technical features in different embodiments may be combined based on an internal logical relationship between the technical features, to form a new embodiment.
3. Numbers in this application are merely used for distinguishing for ease of description and are not intended to limit the scope of this application. Sequence numbers in this application do not mean execution sequences. Execution sequences of processes should be determined based on functions and internal logic of the processes. For example, in the specification, claims, and accompanying drawings of this application, the terms "first", "second", "third", "fourth", and various other terms and reference numerals (if existent) are intended to distinguish between similar objects, but are not intended to limit the size, content, sequence, time sequence, priority, importance, or the like of a plurality of objects. For example, the first information and the second information do not indicate a difference in an information amount, content, a priority, importance, or the like.
4. Terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device.
5. In embodiments of this application, that a network element A sends information A to a network element B may be understood to mean that a destination of the information A or an intermediate network element in a transmission path between the network element A and the destination is the network element B, and may include directly or indirectly sending information to the network element B; and that a network element B receives information A from a network element A may be understood to mean that a source of the information A or an intermediate network element in a transmission path between the network element B and the source is the network element A, and may include directly or indirectly receiving information from the network element A. Information may undergo necessary processing, for example, a format change, between the source for sending the information and the destination. However, the destination may understand valid information from the source. Similar descriptions in this application may be understood similarly, and details are not described herein.

In other words, sending and receiving may be performed between devices, for example, between a terminal device #1 and a terminal device #2; or may be performed inside a device, for example, between components, modules, chips, software modules, or hardware modules inside the device through a bus, a cable, or an interface.
6. In embodiments of this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.
7. In embodiments of this application, that information C is for determining information D includes that the information D is determined based on only the information C, and the information D is determined based on the information C and other information. In addition, that information C is used to determine information D may further include an indirect determining case. For example, the information D is determined based on information E, and the information E is determined based on the information C.
8. In embodiments of this application, "store" or "save" may be storing in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.
9. In embodiments of this application, a "protocol" may be a standard protocol in the communication field, for example, may include a 4th generation (4th generation, 4G) network protocol or a 5th generation (5th generation, 5G) network protocol, a new radio (new radio, NR) protocol, and a related protocol applied to a future communication system. This is not limited in this application.
10. Arrows or blocks shown by dashed lines in diagrams of the accompanying drawings in this specification of this application indicate optional steps or optional modules.

The technical solutions provided in this application may be applied to various communication systems, for example, a fifth generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a sixth generation (6th generation, 6G) mobile communication system, or a system integrating a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an Internet of Things (Internet of Things, IoT) communication system, or another communication system.

The technical solutions provided in this application may be applied to various communication systems, for example, a fifth generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a sixth generation (6th generation, 6G) mobile communication system, or a system integrating a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an Internet of Things (Internet of Things, IoT) communication system, or another communication system.

A device in the communication system may send a signal to another device or receive a signal from another device. The signal may include information, signaling, data, or the like. The device may alternatively be replaced with an entity, a network entity, a network element, a communication device, a communication module, a node, a communication node, or the like. In this disclosure, the device is used as an example for description. For example, the communication system may include at least one terminal device and at least one network device. The network device may send a downlink signal to the terminal device, and/or the terminal device may send an uplink signal to the network device. It may be understood that the terminal device in this application may be replaced with a first device, the network device may be replaced with a second device, and the terminal device and the network device perform a corresponding communication method in this disclosure.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device having a wireless connection function. Currently, some examples of the terminal are: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a wearable device, a terminal device in a 5G network, a terminal device in a future evolved public land mobile communication network (public land mobile network, PLMN), or the like. This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

In embodiments of this application, an apparatus configured to implement a function of the terminal device may be the terminal device, or may be an apparatus, for example, a chip system, that can support the terminal device in implementing the function. The apparatus may be mounted in the terminal device or used in combination with the terminal device. In embodiments of this application, the chip system may include a chip or may include a chip and another discrete component. In embodiments of this application, only an example in which the apparatus configured to implement the function of the terminal device is the terminal device is used for description, and constitutes no limitation on the solutions in embodiments of this application.

A network device in embodiments of this application may be a device configured to communicate with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover any of the following names in a broad sense, or may be replaced with the following names: for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that undertakes a base station function in D2D, V2X, and M2M communication, a network-side device in a 6G network, a device that undertakes a base station function in a future communication system, or the like. The base station can support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist the terminal device in implementing radio access, and different RAN nodes separately implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio unit, for example, included in an RRU, an AAU, or an RRH.

The RAN node may support one or more types of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, in the fronthaul interface, some downlink and/or uplink baseband functions are moved from the DU to the RU for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition is moved from the DU to the RU for implementation; and for uplink, one or more of digital beamforming (beamforming, BF) or fast Fourier transform (fast Fourier transform, FFT)/cyclic prefix (cyclic prefix, CP) removal is moved from the DU to the RU for implementation. In a possible implementation, the interface may be an enhanced common public radio interface (enhanced common public radio interface, eCPRI). In an eCPRI architecture, different split modes between the DU and the RU correspond to different categories (categories, Cat) of eCPRIs, for example, eCPRI Cat A, B, C, D, E, and F.

The eCPRI Cat A is used as an example. For downlink transmission, with layer mapping as a split point, the DU is configured to implement the layer mapping and one or more functions before the layer mapping (to be specific, one or more of encoding, rate matching, scrambling, modulation, and layer mapping), and another function (for example, one or more of resource element (resource element, RE) mapping, BF, or IFFT/CP addition) after the layer mapping is moved to the RU for implementation. For uplink transmission, with RE demapping as a split point, the DU is configured to implement the demapping and one or more functions before the demapping (that is, one or more of the following functions: decoding, rate de-matching, descrambling, demodulation, inverse discrete Fourier transform (inverse discrete Fourier transform, IDFT), channel equalization, and the RE demapping), and another function after the demapping (for example, one or more of digital BF or FFT/CP removal) is moved to the RU for implementation. It may be understood that, for function descriptions of DUs and RUs corresponding to various categories of eCPRIs, refer to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an open radio access network (open radio access network, O-RAN/ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

In embodiments of this application, an apparatus configured to implement a function of the network device may be the network device, or may be an apparatus that can support the network device in implementing the function, for example, a chip system, a hardware circuit, a software module, or a combination of a hardware circuit and a software module. The apparatus may be mounted in the network device or used in combination with the network device. In embodiments of this application, only an example in which the apparatus configured to implement the function of the network device is the network device is used for description, and constitutes no limitation on the solutions in embodiments of this application.

The network device and/or the terminal device may be deployed on land, and include an indoor or outdoor device, a handheld device, or a vehicle-mounted device; may be deployed on water; or may be deployed on a plane, a balloon, or a satellite in the air. Scenarios in which the network device and the terminal device are located are not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In a wireless communication network, for example, in a mobile communication network, services supported by the network are increasingly diversified, and therefore requirements that need to be satisfied are increasingly diversified. For example, the network needs to be capable of supporting an ultra-high rate, an ultra-low latency, and/or massive connections. This feature makes network planning, network configuration, and/or resource scheduling increasingly complex. In addition, because the network has increasingly powerful functions, for example, supports an increasingly high spectrum and supports new technologies such as a higher-order multiple-input multiple-output (multiple-input multiple-output, MIMO), beamforming, and/or beam management, network energy saving becomes a hot research topic. These new requirements, scenarios, and features cause unprecedented challenges to network planning, operation and maintenance, and efficient operation. To address the challenges, an artificial intelligence technology may be introduced into the wireless communication network to implement network intelligence.

To support the AI technology in the wireless network, an AI node may be further introduced into the network.

Optionally, the AI node may be deployed at one or more of the following locations in the communication system: an access network device, a terminal device, a core network device, or the like. Alternatively, the AI node may be independently deployed, for example, deployed at a location other than any one of the foregoing devices, for example, a host or a cloud server in an over the top (over the top, OTT) system. The AI node may communicate with another device in the communication system. For example, the another device may be one or more of the following: a network device, a terminal device, a network element of a core network, or the like.

It may be understood that a quantity of AI nodes is not limited in this application. For example, when there are a plurality of AI nodes, the plurality of AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application. The AI node may be an AI network element, an AI entity, or an AI module.

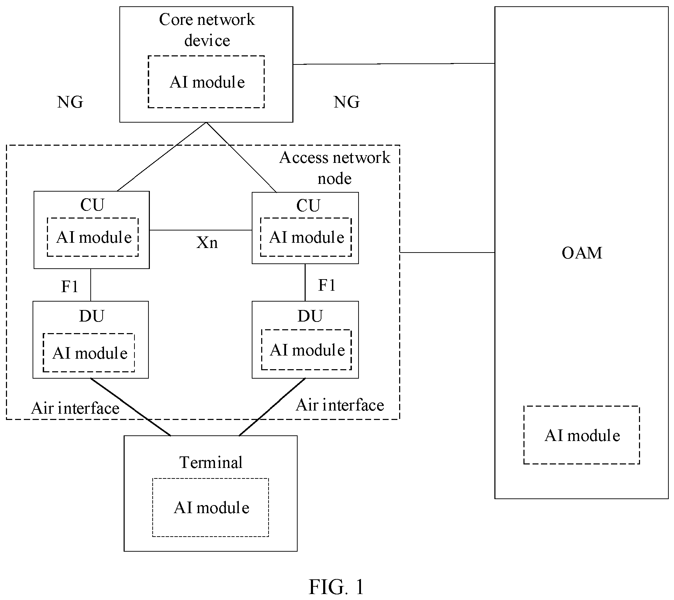

FIG. 1 is a diagram of a possible application framework in a communication system. As shown in FIG. 1, network elements in the communication system are connected through an interface (for example, NG or Xn) or an air interface. One or more AI modules (for clarity, only one AI module is shown in FIG. 1) are deployed on these network element nodes, for example, one or more of the following devices: a core network device, an access network node (RAN node), a terminal, and an OAM. The access network node may serve as an independent RAN node, or may include a plurality of RAN nodes, for example, include a CU and a DU. One or more AI modules may be further disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of the neural network.

One AI module may have one or more models. One model may obtain one output through inference, where the output includes one or more parameters. Learning processes, training processes, or inference processes of different models may be deployed in different nodes or devices, or may be deployed in a same node or device.

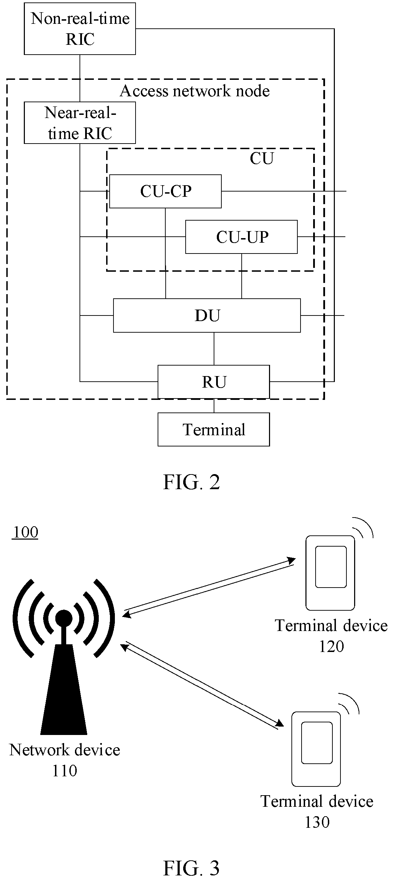

FIG. 2 is a diagram of a possible application framework in a communication system. As shown in FIG. 2, the communication system includes a RAN intelligent controller (RAN intelligent controller, RIC). For example, the RIC may be AI modules 117 and 118 shown in FIG. 1, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, delay-insensitive data. A delay of the data may be on the order of seconds. The near-real-time RIC mainly processes near-real-time information, for example, delay-sensitive data. A delay of the data is on the order of tens of milliseconds.

The near-real-time RIC is configured to perform model training and inference, for example, is configured to train an AI model and perform inference by using the AI model. The near-real-time RIC may obtain information on a network side and/or a terminal side from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from a RAN node (for example, a CU, a CU-CP, a CU-UP, a DU, and/or an RU) and/or a terminal. The information may be used as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

The near-real-time RIC and the non-real-time RIC each may alternatively be independently deployed as a network element. Optionally, the near-real-time RIC and the non-real-time RIC may alternatively serve as a part of another device. For example, the near-real-time RIC is deployed on the RAN node (for example, the CU or the DU), and the non-real-time RIC is deployed on an OAM, a cloud server, a core network device, or another network device.

FIG. 3 is a diagram of a communication system to which a communication method according to an embodiment of this application is applicable. As shown in FIG. 3, the communication system 100 may include at least one network device, for example, a network device 110 shown in FIG. 3. The communication system 100 may further include at least one terminal device, for example, a terminal device 120 and a terminal device 130 shown in FIG. 3. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

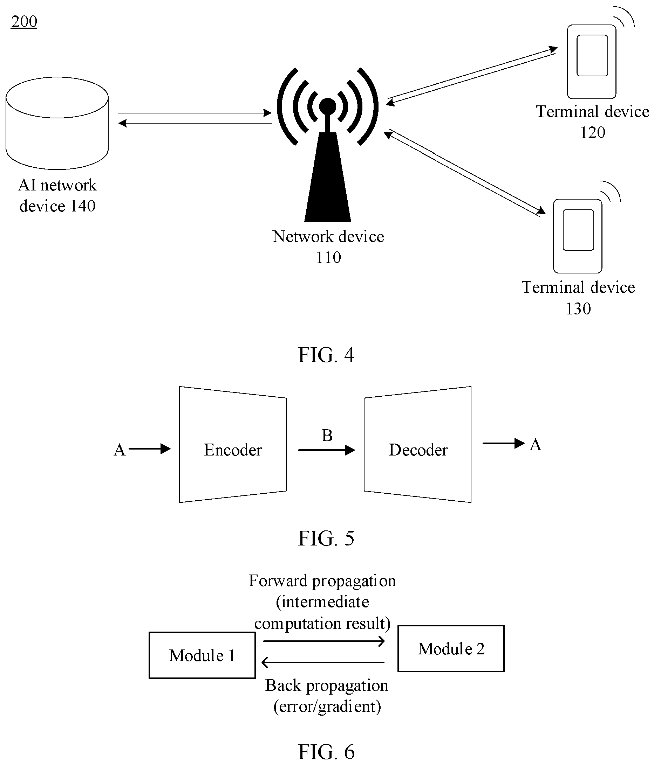

FIG. 4 is a diagram of another communication system to which a communication method according to an embodiment of this application is applicable. Compared with the communication system 100 shown in FIG. 3, the communication system 200 shown in FIG. 4 further includes an AI network element 140. The AI network element 140 is configured to perform an AI-related operation, for example, constructing a training dataset or training an AI model.

In a possible implementation, the network device 110 may send data related to training of the AI model to the AI network element 140, and the AI network element 140 constructs the training dataset and trains the AI model. For example, the data related to the training of the AI model may include data reported by a terminal device. The AI network element 140 may send a result of an operation related to the AI model to the network device 110, and the network device 110 forwards the result of the operation related to the AI model to the terminal device. For example, the result of the operation related to the AI model may include at least one of the following: a trained AI model, an evaluation result or a test result for the model, or the like. For example, a part of the trained AI model may be deployed on the network device 110, and the other part is deployed on the terminal device. Alternatively, the trained AI model may be deployed on the network device 110. Alternatively, the trained AI model may be deployed on the terminal device.

It may be understood that, in FIG. 4, that the AI network element 140 is directly connected to the network device 110 is used merely as an example for description. In another scenario, the AI network element 140 may alternatively be connected to the terminal device. Alternatively, the AI network element 140 may be connected to both the network device 110 and the terminal device. Alternatively, the AI network element 140 may be connected to the network device 110 via a third-party network element. A connection relationship between the AI network element and another network element is not limited in embodiments of this application.

The AI network element 140 may alternatively be disposed on a network device and/or a terminal device as a module, for example, disposed on the network device 110 or the terminal device shown in FIG. 3.

It should be noted that, FIG. 3 and FIG. 4 are merely simplified diagrams of examples for ease of understanding. For example, the communication system may further include another device, for example, may further include a wireless relay device and/or a wireless backhaul device, which are/is not shown in FIG. 3 and FIG. 4. During actual application, the communication system may include a plurality of network devices, and may also include a plurality of terminal devices. Quantities of network devices and terminal devices included in the communication system are not limited in embodiments of this application.

For ease of understanding the solutions in embodiments of this application, the following describes terms that may be used in embodiments of this application.

### (1) AI model:

The AI model is an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another machine learning (machine learning, ML) model.

### (2) Two-side model:

The two-side model may also be referred to as a bilateral model, a cooperative model, a dual model, a two-side (two-side) model, or the like. The two-side model is a model including a plurality of submodels. The plurality of submodels included in the model need to match one another. The plurality of submodels may be deployed on different nodes.

The submodels in embodiments of this application include an encoder (encoder) for compressing information and a decoder (decoder) for recovering compressed information. The encoder and the decoder are used in cooperation. It may be understood that the encoder and the decoder are models that match one another. One encoder may include one or more AI models, and a decoder matching the encoder also includes one or more AI models. An encoder and a decoder that are used in cooperation include a same quantity of AI models, and AI models included in the encoder are in a one-to-one correspondence with AI models included in the decoder. For example, the encoder and the decoder may be separately deployed on a terminal device and a network device.

In a possible design, a set of encoder and decoder that are used in cooperation may be specifically two parts of a same auto-encoder (auto-encoder, AE). The auto-encoder is a neural network for unsupervised learning, and a feature of the auto-encoder is that input data is used as label data. Therefore, the auto-encoder may also be understood as a neural network for self-supervised learning, and the auto-encoder may be used for data compression and recovery. An AE model in which an encoder and a decoder are separately deployed on different nodes is a typical bilateral model.

FIG. 5 is a block diagram of an auto-encoder. As shown in FIG. 5, an encoder in the auto-encoder may compress (encode) data A to obtain data B, and a decoder in the auto-encoder may decompress (decode) the data B to recover the data A. Alternatively, it may be understood that the decoder performs an inverse operation of the encoder.

Alternatively, the AI model in embodiments of this application may be a single-side model, and the AI model may be deployed on a terminal device or a network device.

### (3) Neural network (neural network, NN):

The neural network is a specific implementation form of AI or machine learning. According to a universal approximation theorem, the neural network can approximate any continuous function in theory, so that the neural network has a capability of learning any mapping.

The neural network may include neurons. The neuron may be an operation unit that uses xs and an intercept of 1 as an input. The neural network is a network formed by connecting many single neurons together. To be specific, an output of a neuron may be an input to another neuron. An input to each neuron may be connected to a local receptive field of a previous layer to extract a feature of the local receptive field. The local receptive field may be a region including several neurons.

For example, a type of an AI model is a neural network. The AI model in this disclosure may be a deep neural network (deep neural network, DNN). Based on network construction modes, the DNN may include a feedforward neural network (feedforward neural network, FNN), a convolutional neural network (convolutional neural network, CNN), a recurrent neural network (recurrent neural network, RNN), and the like.

### (4) Channel state information (channel state information, CSI):

In a communication system (for example, an LTE communication system or an NR communication system), a network device needs to determine, based on CSI, configurations of resources, a modulation and coding scheme (modulation and coding scheme, MCS), precoding, and the like for scheduling a downlink data channel for a terminal device. It may be understood that, the CSI is channel information, and is information that can reflect a channel feature or channel quality.

CSI measurement means that a receive end obtains channel information based on a reference signal sent by a transmit end, that is, estimates the channel information by using a channel estimation method. For example, the reference signal may include one or more of a channel state information reference signal (channel state information reference signal, CSI-RS), a synchronization signal/broadcast channel block (synchronization signal/physical broadcast channel block, SSB), a channel sounding reference signal (sounding reference signal, SRS), a demodulation reference signal (demodulation reference signal, DMRS), and the like. One or more of the CSI-RS, the SSB, the DMRS, and the like may be used to measure downlink CSI. The SRS, and/or the DMRS, and the like may be used to measure uplink CSI.

An FDD communication scenario is used as an example. In the FDD communication scenario, an uplink channel and a downlink channel are not reciprocal, that is, reciprocity between the uplink channel and the downlink channel cannot be ensured. Therefore, the network device usually sends a downlink reference signal to the terminal device, and the terminal device performs channel measurement or interference measurement based on the received downlink reference signal to estimate downlink CSI. The terminal device generates a CSI report in a manner predefined in a protocol or in a manner configured by the network device, and feeds back the CSI report to the network device, so that the network device obtains the downlink CSI.

For example, the CSI may include at least one of the following: a channel quality indicator (channel quality indicator, CQI), a precoding matrix indicator (precoding matrix indicator, PMI), a rank indicator (rank indicator, RI), a CSI-RS resource indicator (CSI-RS resource indicator, CRI), a layer indicator (layer indicator, LI), reference signal received power (reference signal received power, RSRP), a signal to interference plus noise ratio (signal to interference plus noise ratio, SINR), and the like. The signal to interference plus noise ratio may also be referred to as a signal-to-interference-plus-noise ratio.

The RI indicates a quantity of downlink transmission layers recommended by the terminal device. The CQI indicates a modulation and coding scheme that is determined by the terminal device and that can be supported in a current channel condition. The PMI indicates precoding recommended by the terminal device. A quantity of precoding layers indicated by the PMI corresponds to the RI.

It may be understood that, the RI, the CQI, the PMI, and the like that are indicated in the CSI report are merely values recommended by the terminal device. The network device may perform downlink transmission based on a part or all of information indicated in the CSI report. Alternatively, the network device may perform downlink transmission without referring to the information indicated in the CSI report.

### (5) Weight:

The weight is a precoding matrix/vector required for precoding on a network device side when the network device performs downlink transmission. In this application, weights are classified into two types. One is an outer-layer weight (which may also be referred to as a dimension reduction weight below), and the dimension reduction weight is used by the network device side to perform port dimension reduction during downlink channel information measurement. The other is an inner-layer weight. The inner-layer weight is a weight obtained after the network device recovers a compressed feedback quantity after the terminal device measures an equivalent channel resulting from port dimension reduction and completes compression and feedback of channel information. The network device may determine, based on the outer-layer weight and the inner-layer weight, a final precoding matrix used during downlink transmission. For example, the network device computes, based on a two-stage codebook, a precoding matrix C finally used during downlink transmission. Specifically, an outer-layer weight is A, and an inner-layer weight is B. The finally used precoding matrix C is determined by using C=A*B, where * represents multiplication.

It may be understood that the weight and the precoding matrix in this application may be replaced with each other.

### (6) Port dimension reduction:

As an array scale on a base station side increases, a dimension of CSI measured and fed back on a terminal side increases accordingly, causing heavier burden of measurement resource overheads and feedback overheads. Therefore, when the network device performs the downlink channel information measurement procedure, the network device performs digital precoding on reference signals of only a few antenna ports by using the outer-layer weight, so that the network device can measure channels of most physical antennas by using only a few reference channel resources (corresponding to a quantity of antenna ports). Dimension reduction in this application is port dimension reduction.

### (7) Antenna port:

An antenna port is a logical concept, and there is no direct correspondence between an antenna port and a physical antenna. The antenna port is usually associated with a reference signal, and the antenna port may be understood as a transceiver interface on a channel through which the reference signal passes. For a low frequency band, one antenna port may correspond to one or more physical antennas (one physical antenna may refer to one digital port, or may refer to one antenna array element). These physical antennas jointly send reference signals. A receive end may consider the physical antennas as a whole, and does not need to distinguish between these physical antennas.

### (8) AI model design:

The AI model design mainly includes a data collection phase (for example, collection of training data and/or inference data), a model training phase, and a model inference phase, and may further include an inference result application phase.

It may be understood that the communication system may include a network element having an artificial intelligence function. The foregoing phases related to the AI model design may be performed by one or more network elements having the artificial intelligence function. In a possible design, the AI function (for example, an AI module or an AI entity) may be configured in an existing network element in the communication system, to implement an AI-related operation, for example, AI model training and/or inference. For example, the existing network element may be a network device or a terminal device. Alternatively, in another possible design, an independent network element may be introduced into the communication system to perform an AI-related operation, for example, AI model training. The independent network element may be referred to as an AI network element (that is, an AI entity or an AI node). The name is not limited in embodiments of this application. For example, the AI network element may be directly connected to a network device in the communication system, or may be indirectly connected to a network device via a third-party network element. The third-party network element may be a core network device, for example, an authentication management function (authentication management function, AMF) network element or a user plane function (user plane function, UPF) network element, or may be an operation, administration, and maintenance (operation administration and maintenance, OAM) network element, a cloud server, or another network element. This is not limited. For example, the independent AI network element may be deployed on one or more of a network device side, a terminal device side, or a core network side. Optionally, the independent AI network element may be deployed on a server, for example, a cloud server, or an over the top (over the top, OTT) device. For example, the AI network element 140 is introduced into the communication system shown in FIG. 4. Optionally, the server or the OTT device may be a third-party network element. In addition, the third-party network element may also be referred to as a third-party device, that is, a device different from a network device or a terminal device.

### (9) Training dataset and inference data:

The training dataset is used to train an AI model. The training dataset may include an input to the AI model, or include an input and a target output of the AI model. The training dataset includes one or more pieces of training data. The training data may include a training sample input into the AI model, and may also include the target output of the AI model. The target output may also be referred to as a label, a sample label, or a label sample. The label is ground truth. In the machine learning field, ground truth (ground truth) usually refers to accurate data or real data.

In the communication field, the training dataset may include simulated data collected by a simulation platform, or may include experimental data collected in an experiment scenario, or may include actual measured data collected in an actual communication network. Geographical environments and channel conditions in which data is generated are different. For example, indoor or outdoor environments, moving speeds, frequency bands, or antenna configurations are different. Therefore, collected data may be classified when the data is obtained. For example, data with a same channel propagation environment and a same antenna configuration is classified into one type.

Model training is essentially learning some features of training data from the training data. During training of an AI model (for example, a neural network model), because an output of the AI model is expected to be as close as possible to a value that is actually expected to be predicted, a current predicted value of the network may be compared with a target value that is actually expected, and then a weight vector of each layer of the AI model is updated based on a difference between the two (certainly, an initialization process is usually performed before the first update, that is, a parameter is preconfigured for each layer of the AI model). For example, if the predicted value of the network is larger, the weight vector is adjusted to obtain a smaller predicted value. The weight vector is continuously adjusted until the AI model can predict the target value that is actually expected or a value that is quite close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A larger output value (loss) of the loss function indicates a greater difference. In this case, the training of the AI model is a process of minimizing the loss, so that the value of the loss function is less than a threshold, or the value of the loss function meets a target requirement. For example, the AI model is a neural network, and adjusting a model parameter of the neural network includes adjusting at least one of the following parameters: a quantity of layers of the neural network, a width of the neural network, a weight of a neuron, or a parameter in an activation function of the neuron.

The inference data may be used as an input to a trained AI model for inference by the AI model. During model inference, the inference data may be input into the AI model to obtain a corresponding output, that is, an inference result.

### (10) Forward propagation and back propagation:

FIG. 6 is a diagram of forward propagation and back propagation of a neural network. During AI model training, a data flow undergoes forward propagation and back propagation. As shown in FIG. 6, an AI module represents a neural network layer or an AI model. Forward propagation means that the neural network transfers an intermediate computation result of a previous neural network layer or a previous AI model to a next neural network layer or a next AI model, to complete intermediate computation required for obtaining a final output result based on a given parameter. Back propagation is a method for computing a gradient in the neural network. To be specific, after an error between the final output result and a label (that is, a ground truth result) is computed, to compute a gradient for updating a trainable parameter of the network, the neural network computes a gradient layer by layer in a back propagation manner. A principle is similar to a chain rule in calculus. An error of a next layer is computed and then propagated to a previous layer, and the previous layer computes a gradient of the network layer based on the current error.

An AI technology is introduced into a wireless communication network to obtain an AI model-based CSI feedback mode. A terminal device compresses and feeds back CSI by using an AI model, and a network device recovers compressed CSI by using an AI model. A sequence (for example, a bit sequence) is transmitted in AI model-based CSI feedback. Compared with conventional CSI, CSI feedback overheads are lower.

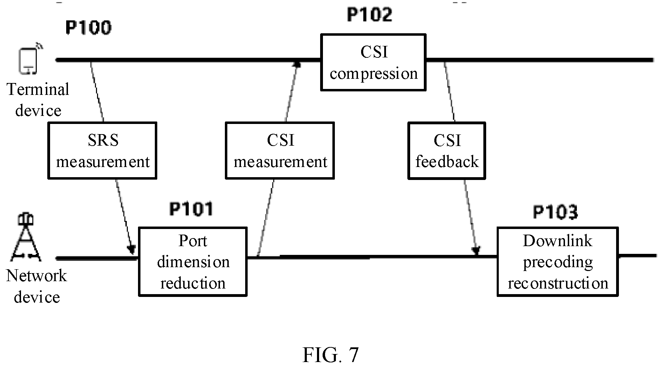

With reference to FIG. 7, the following describes a current AI model-based CSI feedback procedure after port dimension reduction. In this procedure, a quantity of physical antennas is N, a quantity of antenna ports obtained after dimension reduction is M, M is less than N, and both M and N are positive integers. The procedure includes the following steps.

P100: A terminal device sends an uplink reference signal (for example, an SRS) to measure uplink channel information, and a network device receives the uplink reference signal to obtain uplink channel information at this moment.

P101: The network device receives the uplink channel information, and computes a dimension reduction weight ***w*₀** (a dimension of ***w*₀** is N×M) based on the received uplink channel information. For example, the network device computes a second-order statistic Z of the collected uplink channel information based on the uplink channel information, that is, an uplink channel response, and a historical uplink channel response, and then computes the dimension reduction weight ***w*₀** based on the second-order statistic Z in the following manner. After obtaining the dimension reduction weight ***w*₀**, the network device performs port dimension reduction based on the dimension reduction weight, that is, performs digital precoding on reference signals on M ports by using the dimension reduction weight, to measure an equivalent downlink channel response ***h_{DL}** = **H_{DL}*** * ***w*₀** of N physical antennas by using M downlink reference signal (for example, CSI-RS) resources, where ***H_{DL}*** is a real downlink channel response of the N physical antennas (a spatial dimension of ***H_{DL}*** is N). Two current methods for computing a dimension reduction weight are provided below by using examples.

In a method, the network device computes, based on a discrete Fourier transform (discrete Fourier transform, DFT) codebook, projection energy of the second-order statistic Z in the DFT codebook, and selects first M DFT basis vectors **{*l*₀, *l*₁,...*, l*_{*M*-1}}** (where ***lᵢ*** is a 1×N vector) with highest projection energy as the dimension reduction weight ***w*₀**.

In another method, the network device performs singular value decomposition (singular value decomposition, SVD) on the second-order statistic Z, and selects first M eigen directions {***l*₀***,* ***l*₁,...**, ***l*_{*M*-1}}** (where ***lᵢ*** is a 1×N vector) as the dimension reduction weight ***w*₀**.

The foregoing methods are both intended to minimize a loss of energy of an equivalent downlink channel after dimension reduction is performed in comparison with a loss of energy of a real downlink channel. The energy of the equivalent downlink channel is determined based on the equivalent downlink channel response ***h_{DL}**,* and the energy of the real downlink channel is determined based on the real downlink channel response ***H_{DL}**.* For example, a relationship between energy E and a response H is E=||H||₂, where ||H||₂ represents a 2-norm of a matrix H.

P102: The terminal device measures the M downlink reference signals to obtain corresponding equivalent channel information ***H_{DL}w*₀***.* After completing the measurement, the terminal device sends a downlink measurement report to the network device, where the report includes CSI.

In the AI model-based CSI feedback mode, an auto-encoder may be designed and trained at the network device or the terminal device, to perform space-frequency dual-domain CSI compression in place of a codebook in 3rd Generation Partnership Project (3rd Generation Partnership Project, 3GPP) Release 16. For example, a compressed quantity output by an encoder, which serves as an input to a decoder, in the auto-encoder is a compressed quantity of a precoding matrix of the equivalent downlink channel. In a feedback procedure, the compressed quantity is fed back in place of the precoding matrix, so as to reduce feedback overheads.

P103: The network device receives the CSI in the downlink measurement report, obtains a compressed feedback quantity of the precoding matrix of the equivalent channel from the CSI, and recovers an inner-layer weight ***v*** (that is, a precoding matrix of the equivalent channel before compression) in the following manner to complete reconstruction of a downlink precoding matrix.

Because the compressed feedback quantity is obtained by the terminal device by performing compression using the encoder in the auto-encoder, the network device inputs the compressed feedback quantity to the decoder of the auto-encoder, and the decoder outputs the inner-layer weight ***v***. Finally, the network device obtains a final downlink precoding matrix ***V*** of the N physical antennas based on a two-stage codebook structure by using a formula ***V*** = ***v*** ∗ ***w*₀**.

The dimension reduction weight is computed by using an orthogonal codebook or orthogonal decomposition, only minimization of an energy loss of the equivalent channel after dimension reduction is considered, and the dimension reduction weight is independent of the compression solution. As a result, measured equivalent channel information exhibits poor compressibility. Therefore, how to further reduce feedback overheads becomes an urgent problem to be resolved.

In view of this, this application provides a communication method, to effectively resolve the foregoing technical problem. The following describes the communication method in detail.

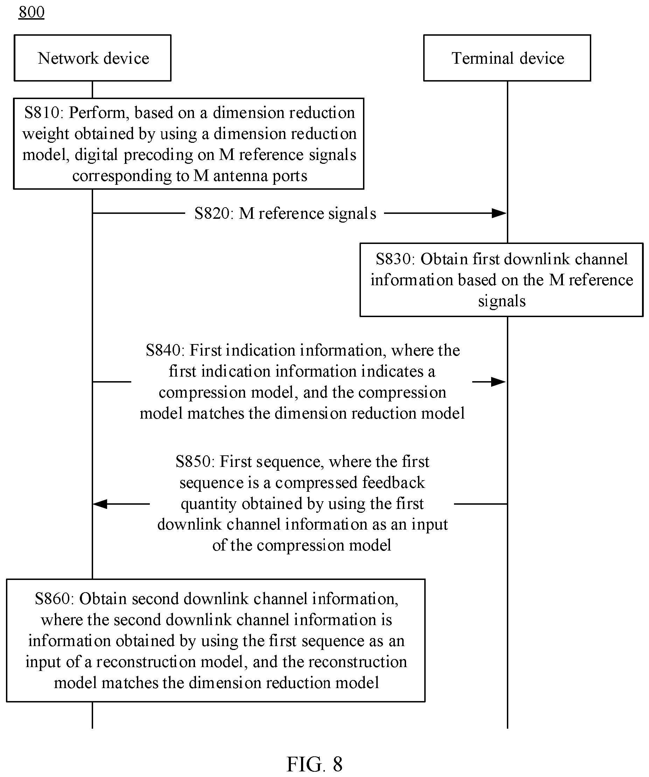

FIG. 8 is a schematic flowchart of a communication method 800 according to this application. The method includes the following steps.

S810: A network device performs, based on a dimension reduction weight, digital precoding on M reference signals corresponding to M antenna ports, where the dimension reduction weight is used to measure an equivalent downlink channel of N physical antennas by using the M reference signals, N is a positive integer, M is a positive integer less than N, and the dimension reduction weight is determined based on a dimension reduction model.

Optionally, the model in this application is an AI model, a neural network model, a machine learning model, or the like. This is not limited in this application.

The network device performs, based on the dimension reduction weight, digital precoding on the M reference signals corresponding to the M antenna ports. In other words, the network device implements port dimension reduction based on the dimension reduction weight, and a dimension of the dimension reduction weight is N*M. For example, the reference signal may be a CSI-RS, an SSB, or a DMRS. This is not limited in this application.

Optionally, the dimension reduction weight is output information obtained by using channel prior information as an input to the dimension reduction model. For example, the channel prior information is determined based on at least one of the following: currently measured uplink channel information, historical uplink channel information, historical downlink channel information, or sensed channel information. For example, the channel prior information may be the currently measured uplink channel information, or may be computed based on the currently measured uplink channel information and the historical uplink channel information.

Optionally, the dimension reduction model may be located as a module in the network device or an AI network element, for example, a third-party network element. For example, the AI network element may be a core network element such as an AMF network element or a UPF network element, or may be an OAM network element, a cloud server, an OTT network element, or another network element. This is not limited.

Example 1: If the dimension reduction model is located in the network device, the network device may input the channel prior information into the dimension reduction model, to obtain the dimension reduction weight (that is, an output of the dimension reduction model).

Example 2: If the dimension reduction model is located in an AI network element, for example, a third-party network element, the network device may send the channel prior information and information of the dimension reduction model to the AI network element. The AI network element inputs the channel prior information into the dimension reduction model to obtain the dimension reduction weight. Then the AI network element sends the dimension reduction weight to the network device.

S820: The network device sends the M reference signal to a terminal device. Correspondingly, the terminal device receives the M reference signals from the network device.

S830: The terminal device obtains first downlink channel information based on the M reference signals.

It may be understood that an information type specifically indicated by the first downlink channel information is not specifically limited in this application. The following provides some examples.

For example, the first downlink channel information indicates an equivalent downlink channel response. If ***H_{DL}*** is a real downlink channel response of the N physical antennas, and a spatial domain dimension is N, and ***w*₀** is the dimension reduction weight, the equivalent downlink channel response obtained by the network device by measuring the M reference signals is ***h_{DL}*** = ***H_{DL}*** ∗ ***w*₀**, where a spatial domain dimension is M.

For example, the first downlink channel information indicates a precoding matrix (which may also be referred to as a weight) corresponding to the equivalent downlink channel response. For example, if the downlink channel response obtained by the network device by measuring the M reference signals is the foregoing ***h_{DL}*** the weight ***v*₀** of the equivalent channel ***h_{DL}*** may be obtained through SVD decomposition, and the spatial domain dimension is M.

S840: The network device sends first indication information, where the first indication information indicates a compression model, and the compression model matches the dimension reduction model. Correspondingly, the terminal device receives the first indication information.

It may be understood that, after obtaining the first downlink channel information, the terminal device feeds back the obtained first downlink channel information to the network device. However, in consideration of feedback overheads, the terminal device does not directly feed back such a high-dimensional tensor to the network device, but sends, to the network device, a compressed feedback quantity obtained after the first downlink channel information is compressed by using the compression model. Because the dimension reduction model is introduced in the method, and a dimension reduction method corresponding to the dimension reduction model is associated with a compression method, the network device indicates, to the terminal device, the compression model that matches the dimension reduction model, to obtain better compression performance.

Further, in a scenario in which dimension reduction is not associated with compression (for example, a scenario in which port dimension reduction is not performed, or a scenario in which dimension reduction weights are orthogonal), because the terminal device needs to feed back only a precoding matrix of the equivalent downlink channel to complete reconstruction of a precoding matrix of a real channel, an input to the compression model is consistent with an output of the reconstruction model. In this case, the compression model is used to compress downlink channel information, the reconstruction model is used to decompress output information of the compression model, and the reconstruction model matches the compression model. In a scenario in which dimension reduction is associated with compression (for example, in the solution provided in this application), orthogonality of dimension reduction weights is not limited, a compression method and a reconstruction method are strongly related to the dimension reduction method, and an input to the compression model is inconsistent with an output of the reconstruction model. Therefore, operating principles of the compression model and the reconstruction model are essentially different from those in the scenario in which dimension reduction is not associated with compression. Therefore, in this embodiment of this application, the first indication information indicates the compression model that matches the dimension reduction model, and the compression model is used to perform feature extraction and compression on an inner-layer weight of the first downlink channel information. This not only can improve compression performance, but also can further ensure decompression performance of the reconstruction model.

For example, the dimension reduction model, the compression model, and the reconstruction model in this embodiment of this application are all related to an antenna port quantity M, a physical antenna quantity N, and the channel prior information.

The following provides several possible specific implementations of the first indication information.

Implementation 1: The first indication information indicates an identifier (identifier, ID) of the compression model.

Implementation 2: The first indication information indicates a dimension reduction model ID and/or a reconstruction model ID.

For example, after the compression model, the dimension reduction model, and the reconstruction model are jointly trained, the compression model ID, the dimension reduction model ID, and the reconstruction model ID may be predefined, and the three model IDs are associated. In this case, the network device may implicitly indicate the compression model by indicating the dimension reduction model ID and/or the reconstruction model ID.

Implementation 3: The first indication information indicates the dimension reduction method or the compression method.

It may be understood that the dimension reduction model may be determined based on the dimension reduction method, and the compression model may be determined based on the dimension reduction model. Therefore, the network device may implicitly indicate the compression model by indicating the dimension reduction method.

Similarly, the compression model may be determined based on the compression method. Therefore, the network device may implicitly indicate the compression model by indicating the compression method.

It should be noted that the dimension reduction model, the compression model, and the reconstruction model are named based on main functions of the models in this application. It may be understood that names of the three models are not specifically limited in this application, and the three models may further have functions other than functions corresponding to the names. For example, the compression model may further implement a quantization function, and/or the reconstruction model may further implement a dequantization function. This is not limited in this application.

S850: The terminal device sends a first sequence to the network device, where the first sequence is a compressed feedback quantity obtained by using the first downlink channel information as an input to the compression model. Correspondingly, the network device receives the first sequence from the terminal device.

Optionally, the compression model may be located as a module in the terminal device or an AI network element, for example, a third-party network element.

Example 1: If the compression model is located in the terminal device, the terminal device may input the first downlink channel information into the compression model, to obtain the first sequence (that is, an output of the compression model).

Example 2: If the compression model is located in an AI network element, the terminal device may send the first downlink channel information and information of the compression model to the AI network element, and the AI network element inputs the first downlink channel information into the indicated compression model to obtain the first sequence. Then the AI network element sends the first sequence to the terminal device.

S860: The network device obtains second downlink channel information, where the second downlink channel information is information obtained by using the first sequence as an input to the reconstruction model, the reconstruction model matches the dimension reduction model, and the second downlink channel information is used to determine downlink channel information of the N physical antennas.

Optionally, the compression model may be an encoder, and correspondingly, the reconstruction model may be a decoder.

Optionally, the reconstruction model may be located as a module in the network device or an AI network element, for example, a third-party network element.

Example 1: If the reconstruction model is located in the network device, the network device may input the first sequence into the reconstruction model, to obtain the second downlink channel information (that is, an output of the reconstruction model).

Example 2: If the reconstruction model is located in an AI network element, the network device may send the first downlink channel information and information of the reconstruction model to the AI network element. The AI network element inputs the first sequence into the reconstruction model, to obtain the second downlink channel information. Then the AI network element sends the second downlink channel information to the network device.

Optionally, if the dimension reduction model, the compression model, and the reconstruction model are located in AI network elements, for example, third-party network elements, the third-party network elements in which the models are located may be the same or may be different. This is not limited in this application. In a possible implementation, the dimension reduction model and the reconstruction model may be located in a third-party network element #1, and the compression model may be located in a third-party network element #2. For the input and output corresponding to each model, refer to the foregoing descriptions. Details are not described herein again.

Optionally, that the second downlink channel information is used to determine the downlink channel information of the N physical antennas may be specifically that the second downlink channel information is used to determine a downlink precoding matrix ***V*** of the N physical antennas. The following describes possible second downlink channel information by using examples.

Example 1: The input (that is, the first sequence) of the reconstruction model is a compressed quantity of the equivalent downlink channel response ***h_{DL},*** and the output (that is, the second downlink channel information) of the reconstruction model may be a channel response ***h_{DL}'**.*

Example 2: The input (that is, the first sequence) of the reconstruction model is a compressed quantity of a precoding matrix ***v*₀** corresponding to the equivalent downlink channel response, and the output (that is, the second downlink channel information) of the reconstruction model is the inner-layer weight ***v*.**

Based on the foregoing Example 1 and Example 2, if the network device determines ***V***, for example, in a possible implementation, the network device computes ***V*** based on ***h_{DL}'*** and the dimension reduction weight ***w*₀** in Example 1, or computes ***V*** based on ***v*** and the dimension reduction weight ***w*₀** in Example 2. For example, the network device computes ***V*** by using ***V** = **v*** * ***w*₀** based on an existing two-stage codebook structure (that is, the foregoing structure of the outer-layer weight and the inner-layer weight). In another implementation, the network device may determine ***V*** by using a model #1. For example, the network device inputs the dimension reduction weight ***w*₀** and the second downlink channel information ( ${h}_{DL}^{′}$ or ***v***) to the model #1, and computes ***V*.**

It may be understood that the model #1 is a model having a function of computing ***V*.** Specifically, specific data of an input parameter required by the model #1 for computing ***V*** is input into the model #1, to obtain output data of the model #1, that is, to obtain corresponding ***V*.** For example, the model #1 is an AI model, a neural network model, or a machine learning model. This is not limited.

Example 3: The input (that is, the first sequence) of the reconstruction model is the compressed quantity of ***h_{DL}*** and the dimension reduction weight ***w*₀** in Example 1, or the input to the reconstruction model is the compressed quantity of ***v*₀** and the dimension reduction weight ***w*₀** in Example 2, and the output of the reconstruction model is ***V*** (that is, the second downlink channel information).

Optionally, that the second downlink channel information is used to determine the downlink channel information of the N physical antennas may be specifically that the second downlink channel information is used to determine a downlink channel response ***H_{DL}*** of the N physical antennas. The following describes possible second downlink channel information by using examples.

Example 1: The input (that is, the first sequence) of the reconstruction model is the compressed quantity of the equivalent downlink channel response ***h_{DL},*** and the output (that is, the second downlink channel information) of the reconstruction model may be a channel response ***h_{DL}'*.**

Based on the foregoing Example 1, if the network device needs to determine ***H_{DL},*** for example, in a possible implementation, the network device may compute ***H_{DL}*** based on ***h_{DL}'*** and the dimension reduction weight ***w*₀**. For example, the network device computes ***H_{DL}*** by using ***H_{DL}*** = ***w*₀** ∗ ***h_{DL}***'. In another implementation, the network device may determine ***H_{DL}*** by using a model #2. For example, the network device inputs the dimension reduction weight ***w*₀** and ***h_{DL}'*** to the model #2, and computes ***H_{DL}*.**

It may be understood that the model #2 is a model having a function of computing ***H_{DL}*.** Specifically, specific data of an input parameter required by the model #2 for computing ***H_{DL}*** is input into the model #2, to obtain output data of the model #2, that is, to obtain corresponding ***H_{DL}.*** For example, the model #2 is an AI model, a neural network model, or a machine learning model. This is not limited.

Example 2: The input (that is, the first sequence) of the reconstruction model is ***h_{DL}'*** and the dimension reduction weight ***w*₀** in Example 1, and the output (that is, the second downlink channel information) of the reconstruction model is ***H***.

It can be learned that, in the method shown in FIG. 7, port dimension reduction is implemented by using the orthogonal codebook or orthogonal decomposition, and is considered only from a perspective of minimization of the energy loss of the equivalent channel. In the method, compressibility of the channel after dimension reduction is not considered, and consequently, compressibility of equivalent channel information is poor. However, the dimension reduction model, the compression model, and the reconstruction model in the method provided in this application are mutually matched models. In other words, the dimension reduction method and the compression method in this application are jointly optimized, so that compressibility of the channel after dimension reduction can be further considered while port dimension reduction is implemented. Therefore, compared with the method shown in FIG. 7, the method provided in this application can improve compressibility of equivalent channel information, thereby further reducing feedback overheads.

Based on the foregoing description, to achieve an effect of reducing feedback overheads and ensuring decoding (also referred to as decompression) performance, the dimension reduction model, the compression model, and the reconstruction model are mutually matched models. Therefore, before a corresponding model is actually applied, joint training may be performed on the three models, to obtain three mutually matched models. The following describes in detail a procedure for performing joint training on three models.

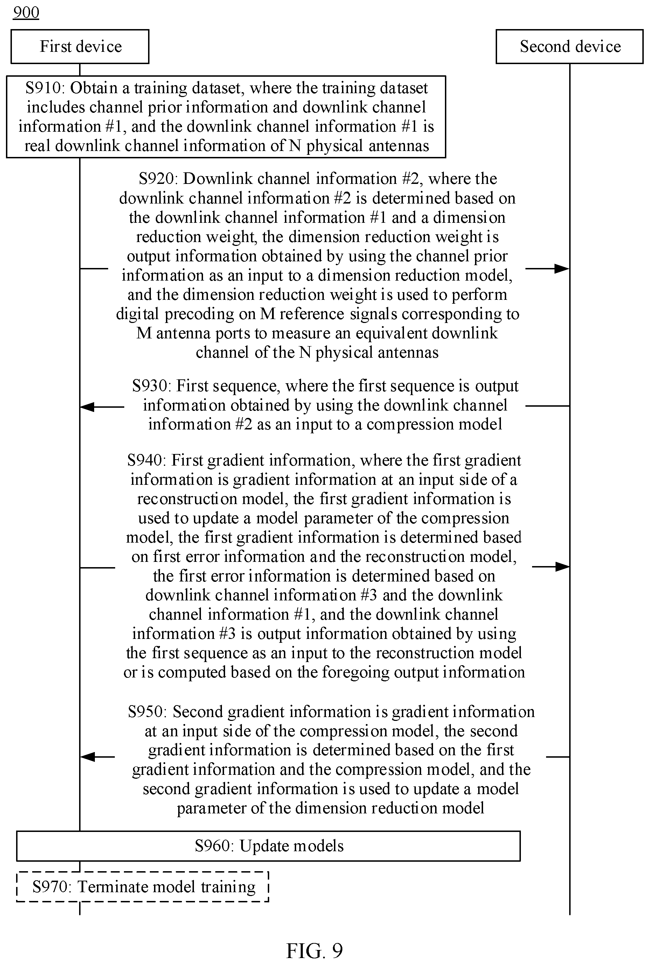

FIG. 9 is a schematic flowchart of a model training method 900 according to this application. It may be understood that the method 900 may be used independently or in combination with the embodiment corresponding to FIG. 8. This is not limited herein. In the method, models may be locally deployed on a first device and a second device, and an intermediate-layer computation result and a gradient are transferred in real time, to complete training of two-side models. A dimension reduction model and a reconstruction model are deployed on a first device side, and a compression model is deployed on a second device side. Optionally, the first device may be a network device or an AI network element #1, for example, a third-party network element #1, and the second device may be a terminal device or an AI network element #2, for example, a third-party network element #2. The method includes the following steps.

S910: The first device obtains a training dataset, where the training dataset includes channel prior information and downlink channel information #1, the downlink channel information #1 is real downlink channel information of N physical antennas, and N is a positive integer.

Before joint training is performed on the three models, the network device collects training data. Training data used to train an AI model includes a training sample and a sample label. The channel prior information may be considered as a training sample, and the downlink channel information #1 may be considered as a sample label (that is, ground truth). For the channel prior information, refer to the description in S810. Details are not described herein again.

For ease of description, the following steps are described by using an example in which the channel prior information is an uplink channel response ***H_{UL}***, and the downlink channel information #1 is a real downlink channel response ***H_{DL}*** of the N physical antennas. For example, in a model training process, ***H_{UL}*** is used as an input to the dimension reduction model, and ***H_{DL}*** is used to compute an input ***v*₀** (a result obtained after an SVD operation is performed on an equivalent downlink channel response ***H_{DL}w*₀**) of the compression model and a final label ***V*** (that is, a precoding matrix of the N physical antennas).

For example, the network device may obtain the uplink channel response ***H_{UL}*** through measurement, and complete collection of the corresponding downlink channel response ***H_{DL}*** by using an existing air interface procedure. However, it should be noted that, during collection of the downlink channel response, each downlink channel response ***H_{DL}*** sample should correspond to each uplink channel response ***H_{UL}*** sample based on an indication from the network device. For example, it is required that ***H_{UL}*** and ***H_{DL}*** should be within a same bandwidth or adjacent bandwidths (a frequency domain position interval is less than K RBs), and a time domain interval between the two should be less than t slots, so that channel responses reflected by ***H_{UL}*** and ***H_{DL}*** have reciprocity that meets a requirement, for example, uplink and downlink reciprocity in delay-angle domain.

S920: The first device sends downlink channel information #2 to the second device, where the downlink channel information #2 is determined based on the downlink channel information #1 and a dimension reduction weight, the dimension reduction weight is output information obtained by using the channel prior information as an input to the dimension reduction model, the dimension reduction weight is used for digital precoding on M reference signals corresponding to M antenna ports to measure an equivalent downlink channel of the N physical antennas, and M is a positive integer less than N. Correspondingly, the second device receives the downlink channel information #2 from the first device.

Optionally, before S920, the method further includes: The first device inputs the uplink channel response ***H_{UL}*** into the dimension reduction model, and outputs the dimension reduction weight ***w*₀**, and then the first device determines the downlink channel information #2 (that is, equivalent downlink channel information) based on the dimension reduction weight ***w*₀.**

For example, the downlink channel information #2 is the equivalent downlink channel response ***H_{DL}w*₀.**

For example, the downlink channel information #2 is an equivalent channel weight ***v*₀** obtained after SVD is performed on the equivalent downlink channel response ***H_{DL}w*₀.**

S930: The second device sends a first sequence to the first device, where the first sequence is output information obtained by using the downlink channel information #2 as an input to the compression model. Correspondingly, the first device receives the first sequence from the second device.

Optionally, before S930, the method further includes: The second device inputs the downlink channel information #2 into the compression model, and outputs the first sequence.

For example, if the downlink channel information #2 is the equivalent downlink channel response ***H_{DL}w*₀**, the first sequence may be a compressed feedback quantity of the equivalent downlink channel response ***H_{DL}w*₀,** or may be a compressed feedback quantity of the equivalent channel weight ***v*₀.** This is not limited.

The downlink channel information #2 and the first sequence may be considered as an intermediate computation result in forward propagation.

S940: The first device sends first gradient information to the second device, where the first gradient information is gradient information at an input side of the reconstruction model, the first gradient information is used to update a model parameter of the compression model, the first gradient information is determined based on first error information and the reconstruction model, the first error information is determined based on downlink channel information #3 and the downlink channel information #1, the downlink channel information #3 is output information obtained by using the first sequence as an input to the reconstruction model or is computed based on output information of the reconstruction model, and the first error information is used to update a model parameter of the reconstruction model. Correspondingly, the second device receives the first gradient information from the first device.

Optionally, before S940, the method further includes: The first device inputs the first sequence into the reconstruction model, to obtain the output information of the reconstruction model (the output information is the downlink channel information #3 or is used to determine the downlink channel information #3), and then the first device determines the first error information based on the downlink channel information #1 and the downlink channel information #3. Then the first device performs back propagation based on the first error information and the reconstruction model to compute the gradient information at an input side (that is, the first gradient information) of the reconstruction model.

That the first error information is determined based on the downlink channel information #3 and the downlink channel information #1 may be understood as follows: The downlink channel information #3 is actual output information of the reconstruction model in a current training round, obtained based on the channel prior information in the training dataset, or is information computed based on actual output information. For example, the downlink channel information #3 is a channel response (or a channel weight) actually obtained in a training process. Correspondingly, the first device may determine an expected channel response (or a channel weight) based on the downlink channel information #1 in the training dataset. In this case, the first device may determine the first error information based on a difference between the expected channel response (or channel weight) and the actually obtained channel response (or channel weight).

The following description is provided by using an example with reference to a specific parameter. For example, if the first sequence is the compressed feedback quantity of the equivalent channel weight ***v*₀,** the first device inputs ***v*₀** into the reconstruction model, to obtain the output information of the reconstruction model, and determines a downlink weight ***V̂*** (that is, the downlink channel information #3) of the N physical antennas based on the output information of the reconstruction model. The output information of the reconstruction AI model may be ***V̂*** itself, or the output information of the reconstruction AI model may be an inner-layer weight ***v*.** Then the first device may compute ***V̂*** based on the inner-layer weight ***v*** and the dimension reduction weight ***w*₀.** Then the first device performs SVD on the real downlink channel response ***H_{DL}*** (that is, the downlink channel information #1) to obtain a real weight ***V*** of the N physical antennas, and computes an error (that is, the first error information) between ***V*** and ***V̂*.** Based on the computed error, the first device computes a gradient at an input side (that is, the first gradient information) of the reconstruction model through back propagation, and transfers the gradient at the input side to the second device.

S950: The second device sends second gradient information to the first device, where the second gradient information is gradient information at an input side of the compression model, the second gradient information is determined based on the first gradient information and the compression model, and the second gradient information is used to update a model parameter of the dimension reduction model. Correspondingly, the first device receives the second gradient information from the second device.

Before S950, the method further includes: The second device computes the gradient information at an input side (that is, the second gradient information) of the compression model through back propagation based on the first gradient information and the compression model.

S960: The first device updates the model parameter of the reconstruction model based on the first error information, and updates the model parameter of the dimension reduction model based on the second gradient information; and the second device updates the model parameter of the compression model based on the first gradient information.

For example, the model parameter may include at least one of the following parameters: a weight of a neuron, a bias, or the like.

Optionally, the method further includes S970: When a termination condition of model training is met, the first device determines to terminate model training.

For example, the termination condition of model training may be as follows: An error indicated by the first error information is less than or equal to a first threshold, or a quantity of model training rounds is equal to a second threshold.

S920 to S960 may be considered as a round of model training. After each round of model training ends, both the first device and the second device need to update model parameters of models locally deployed on the first device and the second device. After the update, the first device and the second device continue to perform a next round of model training until model training is terminated.

For example, after the first device determines to terminate model training, the first device may send a related instruction to the second device to instruct the second device to terminate model training.

For example, the threshold (the first threshold or the second threshold) may be predefined, or may be set by the first device, or may be indicated by another device (for example, the second device). This is not limited in this application.

It may be understood that the dimension reduction model, the compression model, and the reconstruction model that are described in the method 800 shown in FIG. 8 may be the dimension reduction model, the compression model, and the reconstruction model that are obtained after model training is completed in the method 900. For example, if the first device and the second device are an AI network element #1 and an AI network element #2, for example, a third-party network element #1 and a third-party network element #2, and the dimension reduction model and the reconstruction model are deployed on a network device side, while the compression model is deployed on a terminal device side, the first device sends the trained (fully trained) dimension reduction model and reconstruction model, or a training dataset corresponding to the trained models (the dimension reduction model and the reconstruction model) to the network device, and the second device sends the trained compression model or a training dataset corresponding to the trained compression model to the terminal device. Herein, an example in which the second device sends training data of the compression model to the terminal device is used for description. After training of the foregoing three models is completed, the three trained models are obtained. The second device may not directly send the trained compression model, but send a training dataset #1 corresponding to the trained compression model to the terminal device, and the terminal device obtains the corresponding compression model through training based on the received training dataset #1. The training dataset #1 corresponding to the trained compression model may include information A and information B. The information A is output information obtained by using the channel prior information in the training dataset in S910 as an input to the trained dimension reduction model, and the information B is output information obtained by using the information A as an input to the trained compression model. In other words, the information A and the information B in the training dataset #1 are input information and output information of the trained compression model.

The foregoing describes in detail the model training method 900 provided in this application. A conventional model training method supports only training of two models on two sides. The method 900 supports joint training of multiple models on two sides. Based on the method 900, joint training and optimization can be performed on the three models: the dimension reduction model, the compression model, and the reconstruction model, so that channel information feedback overheads can be further reduced.

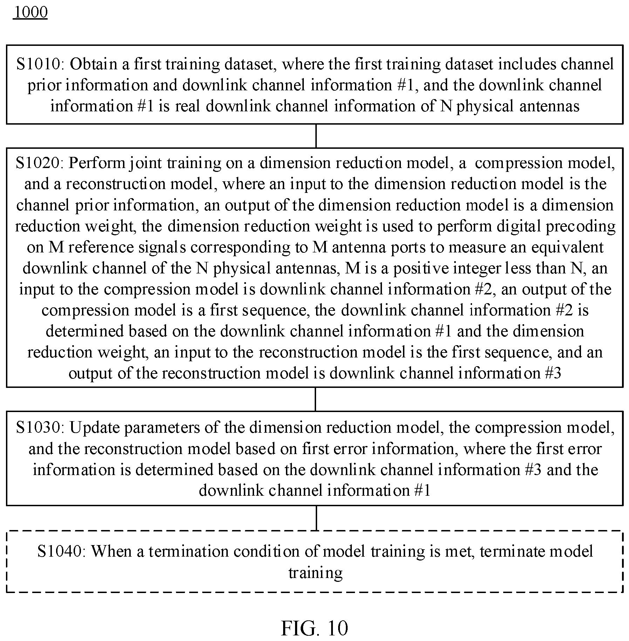

The following describes another model training method provided in this application. A main difference from the method 900 is as follows: In the method 900, three models are jointly trained on two sides. In the method, three models are jointly trained on a single side (for example, the first device), and then, if one or more of the three models, such as a model A, is deployed on another device side (for example, the second device side), the first device may send the trained model A or a training dataset corresponding to the trained model A to the second device, and the second device completes model deployment or performs further training based on the received model A or training dataset. The following provides detailed descriptions with reference to FIG. 10.

FIG. 10 is a schematic flowchart of a model training method 1000 according to this application. In the method, a model is locally deployed on a first device, and an intermediate-layer computation result and a gradient are transferred in real time, to complete training of a single-side model. A dimension reduction model, a compression model, and a reconstruction model are all deployed on a first device side. Optionally, the first device may be a terminal device, a network device, or an AI network element #1, for example, a third-party network element #1. The method includes the following steps.

S1010: The first device obtains a first training dataset, where the first training dataset includes channel prior information and downlink channel information #1, the downlink channel information #1 is real downlink channel information of N physical antennas, and N is a positive integer.

For S1010, refer to the descriptions in S910. Details are not described herein again.

It may be understood that a training manner of the single-side joint training in the method 1000 is consistent with a training manner of the two-side joint training in the method 900. For a more specific training process, refer to the descriptions in the method 900.

S1020: The first device performs joint training on the dimension reduction model, the compression model, and the reconstruction model, where an input to the dimension reduction model is the channel prior information, an output of the dimension reduction model is a dimension reduction weight, the dimension reduction weight is used for digital precoding on M reference signals corresponding to M antenna ports to measure an equivalent downlink channel of the N physical antennas, M is a positive integer less than N, an input to the compression model is downlink channel information #2, an output of the compression model is a first sequence, the downlink channel information #2 is determined based on the downlink channel information #1 and the dimension reduction weight, an input to the reconstruction model is the first sequence, and an output of the reconstruction model is downlink channel information #3.

For example, the channel prior information may be an uplink channel response ***H_{UL},*** and the downlink channel information #1 may be a real downlink channel response ***H_{DL}*** of the N physical antennas. For the input and output of each model and examples, refer to descriptions in S920 to S950. Details are not described herein again.

S1030: The first device updates parameters of the dimension reduction model, the compression model, and the reconstruction model based on first error information, where the first error information is determined based on the downlink channel information #3 and the downlink channel information #1.

It may be understood that, in the method, the first device obtains first gradient information and second gradient information as described in S940 and S950. Further, the first device updates a model parameter of the reconstruction model based on the first error information, updates a model parameter of the dimension reduction model based on the second gradient information, and updates a model parameter of the compression model based on the first gradient information.

For the first error information, related examples of the first error information, the first gradient information, and the second gradient information, refer to descriptions in S940 and S950. Details are not described herein again.

Optionally, the method further includes S1040: When a termination condition of model training is met, the first device terminates model training.

For an example of a possible termination condition of model training, refer to the description in S970. Details are not described herein again.

S1020 and S1030 may be considered as a round of model training. After each round of model training ends, the first device needs to update model parameters of the three models locally deployed on the first device. After the update, the first device continues to perform a next round of model training until model training is terminated.

In a possible scenario, if the trained dimension reduction model and reconstruction model are to be deployed on a network device side, and the trained compression model is to be deployed on a terminal device side, and the first device is a network device, after the network device completes joint training of the three models, the network device may send information corresponding to (1) or (2) to the terminal device.
(1) The network device sends the trained compression model to the terminal device. Correspondingly, the terminal device receives the trained compression model from the network device.

Example 1: The terminal device directly uses the received compression model as the compression model in the method 800.

Example 2: The terminal device may modify the received compression model and use a modified compression model as the compression model in the method 800.

It may be understood that the modification in Example 2 may be retraining using some datasets incorporating features of the terminal device, and/or retraining after a structure of the received compression model is modified.

(2) The network device sends a second training dataset to the terminal device, where the second training dataset is a training dataset including an input and an output of the trained compression model. Correspondingly, the terminal device receives the second training dataset from the network device.

It may be understood that the second training dataset includes information C and information D. The information C is output information obtained by using the channel prior information in the first training dataset as an input to the trained dimension reduction model, and the information D is output information obtained by using the information C as an input to the trained compression model.

Example 1: The terminal device uses a compression model trained based on the second training dataset as the compression model in the method 800.

Example 2: The terminal device modifies a compression model trained based on the second training dataset, and uses a modified compression model as the compression model in the method 800.

In another possible scenario, if the trained dimension reduction model and reconstruction model are deployed on the network device side, and the trained compression model is deployed on the terminal device side, and the first device is an AI network element, for example, a third-party network element, the third-party network element may send the trained models or corresponding training datasets to the network device and the terminal device respectively. For brevity, detailed examples are not described herein.

It should be noted that in the method 900 and the method 1000, three models are used as an example to describe in detail a single-side joint training procedure and a two-side joint training procedure. The training method provided in this application is also applicable to a joint training procedure for Y (Y>3) models.

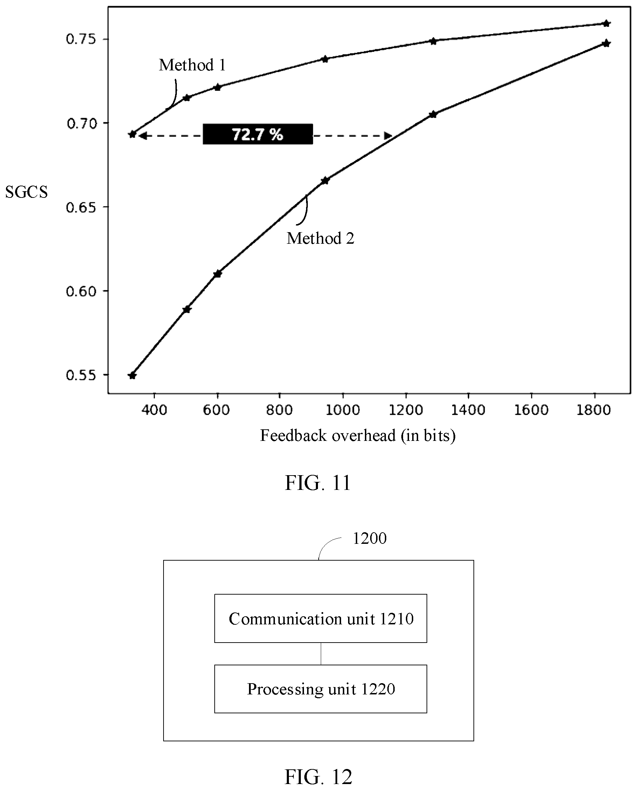

The foregoing describes in detail two model training methods provided in this application. With reference to FIG. 11, the following provides a comparison of simulation performance between a model-based dimension reduction method according to this application and a conventional orthogonal-codebook-based dimension reduction method.

FIG. 11 is a diagram illustrating a comparison of performance between a model-based dimension reduction and compression method (method 1) according to this application and a conventional orthogonal-codebook-based dimension reduction and compression method (method 2). A dimension reduction weight is used to measure an equivalent downlink channel of 128 physical antennas by using 32 reference signals (corresponding to 32 antenna ports), and structures of AI models used for compression in the two solutions are consistent. In FIG. 11, a horizontal axis represents a feedback overhead, and a vertical axis represents a square generalized cosine similarity (square generalized cosine similarity, SGCS) (the SGCS may also be simply understood as accuracy of a reconstructed downlink precoding matrix of the 128 physical antennas), where the SGCS meets the following formula $SGCS = E \left\{\frac{1}{{N}_{f} \times K}{\sum }_{i = 1}^{{N}_{f}} {\sum }_{j = 1}^{K} {\left(\frac{\left‖{{V}^{˜}}_{i}^{jH}{V}_{i}^{j}\right‖}{\left‖{{V}^{˜}}_{i}^{j}\right‖ \left‖{V}_{i}^{j}\right‖}\right)}^{2}\right\}$, where K is a rank (a rank of a channel), *N_{f}* is a quantity of frequency domain units (one frequency domain unit may be one or more subcarriers or RBs, and this is not limited), and E{·} represents a mean value of samples in parentheses, *V̂* is the reconstructed downlink precoding matrix of the 128 physical antennas, V is a label, that is, V is ground truth of the downlink precoding matrix of the 128 physical antennas, (.)^{H} is a conjugate transpose of a vector, ||. || represents a modulus of a vector, and ||. || represents an absolute value of the vector. It can be learned from FIG. 11 that, compared with the orthogonal-codebook-based dimension reduction solution, feedback overheads in the solution proposed in this application are reduced by about 70% when performance is the same (that is, when values corresponding to the vertical axis are the same).

It may be understood that the foregoing method is not limited to port dimension reduction, and may be further applicable to a dimension reduction scenario in another dimension, for example, dimension reduction in frequency domain, or dimension reduction in analog beam domain. This is not limited in this application.

It may be understood that sequence numbers of the foregoing processes do not mean an execution order. The execution order of the processes should be determined based on functions and internal logic of the processes, and should not be construed as any limitation on implementation processes of embodiments of this application.

It may be further understood that, in some of the foregoing embodiments, a device in an existing network architecture is mainly used as an example for description. It may be understood that a specific form of the device is not limited in embodiments of this application. For example, all devices that can implement a same function in the future are applicable to embodiments of this application.

It may be understood that, in the foregoing method embodiments, methods and operations implemented by a device (for example, the network device, the terminal device, the first device, or the second device) may alternatively be implemented by a component (such as a chip or a circuit) of the device.

The methods provided in embodiments of this application are described above in detail with reference to FIG. 1 to FIG. 11. The foregoing methods are mainly described from a perspective of interaction between the network device and the terminal device (or between the first device and the second device). It may be understood that, to implement the foregoing functions, the network device and the terminal device (or the first device and the second device) include corresponding hardware structures and/or software modules for performing the functions.

A person skilled in the art should be aware that units and algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

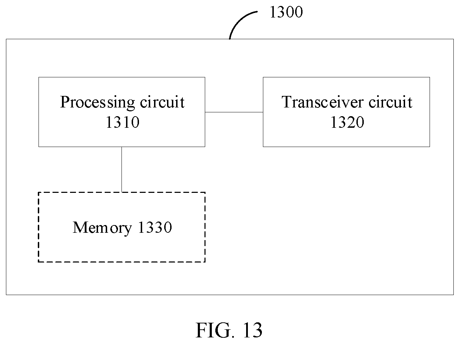

Communication apparatuses provided in embodiments of this application are described below with reference to FIG. 12 and FIG. 13. It may be understood that descriptions of apparatus embodiments correspond to the descriptions of the method embodiments. Therefore, for content that is not described in detail, refer to the foregoing method embodiments. For brevity, details of some content are not described herein again. In embodiments of this application, a device may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that the module division in embodiments of this application is an example, and is merely logical function division. There may be another division manner in actual implementation. In the following description, it is assumed that functional modules are obtained through division based on corresponding functions.

The foregoing describes in detail the methods provided in this application. The following describes a communication apparatus provided in this application. In a possible implementation, the apparatus is configured to implement the steps or procedures corresponding to the terminal device in the foregoing method embodiments. In another possible implementation, the apparatus is configured to implement the steps or procedures corresponding to the network device in the foregoing method embodiments. In still another possible implementation, the apparatus is configured to implement the steps or procedures corresponding to the first device in the foregoing method embodiments. For example, the first device may be a network device or an AI network element #1, for example, a third-party network element #1. In still another possible implementation, the apparatus is configured to implement the steps or procedures corresponding to the second device in the foregoing method embodiments. For example, the second device may be a terminal device or an AI network element #2, for example, a third-party network element #2. In still another possible implementation, the apparatus is configured to implement the steps or procedures corresponding to the network device and an AI network element on which a dimension reduction model and a reconstruction model are deployed in the method 800. In still another possible implementation, the apparatus is configured to implement the steps or procedures corresponding to the terminal device and an AI network element on which a compression model is deployed in the foregoing method embodiments. In other words, the first device may be the network device and the AI network element #1, and/or the second device is the terminal device and the AI network element #2.

FIG. 12 is a block diagram of a communication apparatus 1200 according to an embodiment of this application. As shown in FIG. 12, the apparatus 1200 may include a communication unit 1210 and a processing unit 1220. The communication unit 1210 may communicate with the outside, and the processing unit 1220 is configured to process data. The communication unit 1210 may also be referred to as a communication interface or a transceiver unit.

In a possible design, the apparatus 1200 may implement the steps or procedures performed by the network device in the foregoing method embodiments. The processing unit 1220 is configured to perform processing-related operations of the network device in the foregoing method embodiments, and the communication unit 1210 is configured to perform sending-related operations of the network device in the foregoing method embodiments.

In another possible design, the apparatus 1200 may implement the steps or procedures performed by the terminal device in the foregoing method embodiments. The communication unit 1210 is configured to perform receiving-related operations of the terminal device in the foregoing method embodiments, and the processing unit 1220 is configured to perform processing-related operations of the terminal device in the foregoing method embodiments.

In still another possible design, the apparatus 1200 may implement the steps or procedures performed by the first device in the foregoing method embodiments. The communication unit 1210 is configured to perform receiving-related operations of the first device in the foregoing method embodiments, and the processing unit 1220 is configured to perform processing-related operations of the first device in the foregoing method embodiments.

In still another possible design, the apparatus 1200 may implement the steps or procedures performed by the second device in the foregoing method embodiments. The communication unit 1210 is configured to perform receiving-related operations of the second device in the foregoing method embodiments, and the processing unit 1220 is configured to perform processing-related operations of the second device in the foregoing method embodiments.

It may be understood that the apparatus 1200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function.

The apparatus 1200 in the foregoing solutions has functions of implementing corresponding steps performed by the device in the foregoing methods. The functions may be implemented by hardware, or may be implemented by hardware by executing corresponding software. The hardware or software includes one or more modules corresponding to the foregoing functions. For example, the communication unit may be replaced with a transceiver (for example, a sending unit in the communication unit may be replaced with a transmitter, and a receiving unit in the communication unit may be replaced with a receiver), and another unit such as the processing unit may be replaced with a processor, so as to separately perform sending and receiving operations and related processing operations in each method embodiment.

In addition, alternatively, the communication unit may be a transceiver circuit (for example, may include a receiving circuit and a sending circuit), and the processing unit may be a processing circuit. In this embodiment of this application, the apparatus in FIG. 12 may be the device in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 13 is a block diagram of a communication apparatus 1300 according to an embodiment of this application. The apparatus 1300 includes a processing circuit 1310 and a transceiver circuit 1320. The processing circuit 1310 and the transceiver circuit 1320 communicate with each other through an internal connection path, and the processing circuit 1310 is configured to execute instructions, to control the transceiver circuit 1320 to send a signal and/or receive a signal.

Optionally, the apparatus 1300 may further include a memory 1330. The memory 1330 communicates with the processing circuit 1310 and the transceiver circuit 1320 through internal connection paths. The memory 1330 is configured to store instructions, and the processing circuit 1310 may execute the instructions stored in the memory 1330.

For example, the processing circuit 1310 may be one or more processors, or may be all or some circuits of one or more processors.

For example, the transceiver circuit 1320 may be a transceiver, an interface circuit, or an input/output circuit.

In a possible implementation, the apparatus 1300 is configured to implement the procedures and steps corresponding to the network device in the foregoing method embodiments. In another possible implementation, the apparatus 1300 is configured to implement the procedures and steps corresponding to the terminal device in the foregoing method embodiments. In still another possible implementation, the apparatus 1300 is configured to implement the procedures and steps corresponding to the first device in the foregoing method embodiments. In still another possible implementation, the apparatus 1300 is configured to implement the procedures and steps corresponding to the second device in the foregoing method embodiments.

It may be understood that the apparatus 1300 may be specifically the device in the foregoing embodiments, or may be a chip or a chip system. Correspondingly, the transceiver circuit 1320 may be a transceiver circuit of the chip. This is not limited herein. Specifically, the apparatus 1300 may be configured to perform the steps and/or procedures corresponding to the device in the foregoing method embodiments. Optionally, the memory 1330 may include a read-only memory and a random access memory, and provide instructions and data for the processing circuit. A part of the memory may further include a non-volatile random access memory. For example, the memory may further store information of a device type. The processing circuit 1310 may be configured to execute the instructions stored in the memory. When the processing circuit 1310 executes the instructions stored in the memory, the processing circuit 1310 is configured to perform the steps and/or procedures corresponding to the device in the method embodiments.

In an implementation process, the steps of the foregoing methods can be completed by using a hardware integrated logic circuit in the processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor. To avoid repetition, details are not described herein again.

For example, the processor in embodiments of this application may be an integrated circuit chip, and has a signal processing capability. In an implementation process, the steps in the foregoing method embodiments may be completed by a hardware integrated logic circuit in the processor or by using instructions in a form of software. The processor may be a general-purpose processor, a digital signal processor (digital signal processor, DSP), an ASIC, a field-programmable gate array (field-programmable gate array, FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), and an electrically erasable programmable read-only memory (electrically EPROM, EEPROM), or a flash memory. The volatile memory may be a random access memory (random access memory, RAM), used as an external cache. Through illustrative but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the system and the method described in this specification includes but is not limited to these and any other appropriate type of memory.

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

In addition, this application further provides a computer-readable storage medium. The computer-readable storage medium stores computer instructions. When the computer instructions are run on a computer, the operations and/or procedures performed by the network device, the terminal device, the first device, or the second device in the method embodiments of this application are performed.

This application further provides a computer program product. The computer program product includes computer program code or instructions. When the computer program code or the instructions are run on a computer, the operations and/or procedures performed by the network device, the terminal device, the first device, or the second device in the method embodiments of this application are performed.

In addition, this application further provides a chip. The chip includes a processing circuit. A memory configured to store a computer program is disposed independent of the chip. The processing circuit is configured to execute the computer program stored in the memory, to perform the operations and/or processing performed by the network device, the terminal device, the first device, or the second device in any method embodiment.

Further, the chip may include a communication interface. The communication interface may be an input/output interface, an interface circuit, or the like. Further, the chip may include the memory.

In addition, this application further provides a communication system. The communication system includes the network device and the terminal device, and/or the first device and the second device in embodiments of this application.

It should further be noted that the memory described in this specification is intended to include, but is not limited to, these memories and any memory of another appropriate type.

A person of ordinary skill in the art may be aware that units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. A person skilled in the art may clearly understand that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in embodiments. In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It may be understood that an "embodiment" mentioned throughout this specification means that particular features, structures, or characteristics related to this embodiment are included in at least one embodiment of this application. Therefore, embodiments in the entire specification do not necessarily refer to a same embodiment. In addition, these specific features, structures, or characteristics may be combined in one or more embodiments in any appropriate manner.

It may be further understood that, in this application, the terms "when", "provided that", and "if" mean that a network element performs corresponding processing in an objective situation, but do not constitute a time limit, do not require the network element to take a determining action during implementation, and do not mean other limitations either.

It may be further understood that in embodiments of this application, "B corresponding to A" indicates that B is associated with A, and B may be determined based on A. However, it may be further understood that determining B based on A does not mean that B is determined based only on A. B may alternatively be determined based on A and/or other information.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
performing, based on a dimension reduction weight, digital precoding on M reference signals corresponding to M antenna ports, wherein the dimension reduction weight is used to measure an equivalent downlink channel of N physical antennas by using the M reference signals, N is a positive integer, M is a positive integer less than N, and the dimension reduction weight is determined based on a dimension reduction model;
sending the M reference signals;
sending first indication information, wherein the first indication information indicates a compression model, and the compression model matches the dimension reduction model;
receiving a first sequence, wherein the first sequence is a compressed feedback quantity obtained by using first downlink channel information as an input to the compression model, and the first downlink channel information is obtained by measuring the M reference signals; and
obtaining second downlink channel information, wherein the second downlink channel information is information obtained by using the first sequence as an input to a reconstruction model, the reconstruction model matches the dimension reduction model, and the second downlink channel information is used to determine downlink channel information of the N physical antennas.

2. A communication method, comprising:
receiving M reference signals corresponding to M antenna ports, wherein M is a positive integer;
obtaining first downlink channel information based on the M reference signals;
receiving first indication information, wherein the first indication information indicates a compression model, the compression model matches a dimension reduction model, the dimension reduction model is used to obtain a dimension reduction weight, the dimension reduction weight is used to measure an equivalent downlink channel of N physical antennas by using the M reference signals, N is a positive integer, and M is a positive integer less than N; and
sending a first sequence, wherein the first sequence is a compressed feedback quantity obtained by using the first downlink channel information as an input to the compression model, the first sequence is used as an input to a reconstruction model and decompressed to obtain second downlink channel information, the reconstruction model matches the dimension reduction model, and the second downlink channel information is used to determine downlink channel information of the N physical antennas.

3. The method according to claim 1 or 2, wherein the dimension reduction weight is output information obtained by using channel prior information as an input to the dimension reduction model.

4. The method according to claim 3, wherein the channel prior information is determined based on at least one of the following: currently measured uplink channel information, historical uplink channel information, historical downlink channel information, or sensed channel information.

5. The method according to claim 3 or 4, wherein the dimension reduction model, the compression model, and the reconstruction model are all related to an antenna port quantity M, a physical antenna quantity N, and the channel prior information.

6. The method according to any one of claims 1 to 5, wherein
the first downlink channel information indicates an equivalent downlink channel response, and the first sequence is a compressed feedback quantity of the equivalent downlink channel response.

7. The method according to any one of claims 1 to 5, wherein
the first downlink channel information indicates a precoding matrix corresponding to the equivalent downlink channel response, and the first sequence is a compressed feedback quantity of precoding matrix information corresponding to the equivalent downlink channel response.

8. The method according to any one of claims 1 to 7, wherein the downlink channel information of the N physical antennas comprises a downlink precoding matrix of the N physical antennas.

9. A model training method, comprising:
obtaining a training dataset, wherein the training dataset comprises channel prior information and first downlink channel information, the first downlink channel information is real downlink channel information of N physical antennas, and N is a positive integer;
sending second downlink channel information, wherein the second downlink channel information is determined based on the first downlink channel information and a dimension reduction weight, the dimension reduction weight is output information obtained by using the channel prior information as an input to a dimension reduction model, the dimension reduction weight is used for digital precoding on M reference signals corresponding to M antenna ports to measure an equivalent downlink channel of the N physical antennas, and M is a positive integer less than N;
receiving a first sequence, wherein the first sequence is output information obtained by using the second downlink channel information as an input to a compression model;
sending first gradient information, wherein the first gradient information is gradient information at an input side of a reconstruction model, the first gradient information is used to update a network parameter of the compression model, the first gradient information is determined based on first error information and the reconstruction model, the first error information is determined based on third downlink channel information and the first downlink channel information, and the third downlink channel information is output information obtained by using the first sequence as an input to the reconstruction model or is computed based on output information of the reconstruction model;
receiving second gradient information, wherein the second gradient information is gradient information at an input side of the compression model, and the second gradient information is determined based on the first gradient information and the compression model; and
updating a model parameter of the reconstruction model based on the first error information, and updating a model parameter of the dimension reduction model based on the second gradient information.

10. The method according to claim 9, wherein the method further comprises:
when a termination condition of model training is met, terminating model training.

11. A model training method, comprising:
receiving second downlink channel information, wherein the second downlink channel information is determined based on first downlink channel information and a dimension reduction weight, the first downlink channel information is real downlink channel information of N physical antennas, the dimension reduction weight is output information obtained by using channel prior information as an input to a dimension reduction model, the dimension reduction weight is used for digital precoding on M reference signals corresponding to M antenna ports to measure an equivalent downlink channel of the N physical antennas, N is a positive integer, M is a positive integer less than N, and the first downlink channel information and the channel prior information constitute a training dataset used for model training;
sending a first sequence, wherein the first sequence is output information obtained by using the second downlink channel information as an input to a compression model;
receiving first gradient information, wherein the first gradient information is gradient information at an input side of a reconstruction model, the first gradient information is used to update a model parameter of the compression model, the first gradient information is determined based on first error information and the reconstruction model, the first error information is determined based on third downlink channel information and the first downlink channel information, the third downlink channel information is output information obtained by using the first sequence as an input to the reconstruction model or is computed based on output information of the reconstruction model, and the first error information is used to update a model parameter of the reconstruction model;
sending second gradient information, wherein the second gradient information is gradient information at an input side of the compression model, and the second gradient information is determined based on the first gradient information and the compression model; and
updating the model parameter of the compression model based on the first gradient information.

12. The method according to any one of claims 9 to 11, wherein the channel prior information is determined based on at least one of the following: currently measured uplink channel information, historical uplink channel information, historical downlink channel information, or sensed channel information.

13. The method according to any one of claims 9 to 12, wherein the first downlink channel information is a real downlink channel response of the N physical antennas.

14. The method according to claim 13, wherein
the second downlink channel information indicates a downlink channel response, and the downlink channel response is determined based on the first downlink channel information and the dimension reduction weight, or the second downlink channel information indicates a weight corresponding to the downlink channel response.

15. The method according to claim 14, wherein the third downlink channel information is a reconstructed weight of the N physical antennas, the first error information indicates an error between the third downlink channel information and a real weight of the N physical antennas, and the real weight of the N physical antennas is determined based on the first downlink channel information.

16. A model training method, comprising:
obtaining a first training dataset, wherein the first training dataset comprises channel prior information and first downlink channel information, the first downlink channel information is real downlink channel information of N physical antennas, and N is a positive integer;
performing joint training on a dimension reduction model, a compression model, and a reconstruction model, wherein an input to the dimension reduction model is the channel prior information, an output of the dimension reduction model is a dimension reduction weight, the dimension reduction weight is used for digital precoding on M reference signals corresponding to M antenna ports to measure an equivalent downlink channel of the N physical antennas, M is a positive integer less than N, an input to the compression model is second downlink channel information, an output of the compression model is a first sequence, the second downlink channel information is determined based on the first downlink channel information and the dimension reduction weight, an input to the reconstruction model is the first sequence, and an output of the reconstruction model is third downlink channel information; and
updating parameters of the dimension reduction model, the compression model, and the reconstruction model based on first error information, wherein the first error information is determined based on the third downlink channel information and the first downlink channel information.

17. The method according to claim 16, wherein when an error indicated by the first error information is less than or equal to a first threshold, or a quantity of model training rounds is equal to a second threshold, model training is terminated.

18. The method according to claim 17, wherein
the second downlink channel information indicates a downlink channel response, and the downlink channel response is determined based on the first downlink channel information and the dimension reduction weight, or the second downlink channel information indicates a weight corresponding to the downlink channel response.

19. The method according to claim 18, wherein the third downlink channel information is a reconstructed weight of the N physical antennas, the first error information indicates an error between the third downlink channel information and a real weight of the N physical antennas, and the real weight of the N physical antennas is determined based on the first downlink channel information.

20. A model training method, comprising:
receiving a second training dataset, wherein the second training dataset comprises output information of a dimension reduction model and output information of a compression model, both obtained by reusing a first training dataset after joint training of the dimension reduction model, the compression model, and a reconstruction model based on the first training dataset is completed, and the first training dataset comprises channel prior information and first downlink channel information, wherein in a round of joint training corresponding to the dimension reduction model, the compression model, and the reconstruction model, an input to the dimension reduction model is the channel prior information, an output of the dimension reduction model is a dimension reduction weight, the dimension reduction weight is used for digital precoding on M reference signals corresponding to M antenna ports to measure an equivalent downlink channel of N physical antennas, M is a positive integer less than N, an input to the compression model is second downlink channel information, an output of the compression model is a first sequence, the second downlink channel information is determined based on the first downlink channel information and the dimension reduction weight, an input to the reconstruction model is the first sequence, and an output of the reconstruction model is third downlink channel information; and training a first model based on the second training dataset to obtain a second model.

21. The method according to claim 20, wherein the method further comprises:
sending a corresponding compression model obtained after model training is completed; or sending the second training dataset, wherein the second training dataset comprises the output information of the dimension reduction model and the output information of the compression model, both obtained by reusing the first training dataset after model training is completed.

22. The method according to any one of claims 16 to 21, wherein the channel prior information is determined based on at least one of the following: currently measured uplink channel information, historical uplink channel information, historical downlink channel information, or sensed channel information.

23. The method according to any one of claims 16 to 22, wherein the first downlink channel information is a real downlink channel response of the N physical antennas.

24. The method according to claim 23, wherein the second downlink channel information indicates a downlink channel response, and the downlink channel response is determined based on the first downlink channel information and the dimension reduction weight, or the second downlink channel information indicates a weight corresponding to the downlink channel response.

25. A communication apparatus, comprising a module or a unit configured to perform the method according to any one of claims 1 and 3 to 8, or comprising a module or a unit configured to perform the method according to any one of claims 2 to 8, or comprising a module or a unit configured to perform the method according to any one of claims 9, 10, and 12 to 15, or comprising a module or a unit configured to perform the method according to any one of claims 11 to 15, or comprising a module or a unit configured to perform the method according to any one of claims 16 to 19 or any one of claims 22 to 24, or comprising a module or a unit configured to perform the method according to any one of claims 20 to 24.

26. A communication apparatus, comprising:
a processor, configured to execute a computer program stored in a memory, so as to enable the apparatus to perform the method according to any one of claims 1 and 3 to 8, or enable the apparatus to perform the method according to any one of claims 2 to 8, or enable the apparatus to perform the method according to any one of claims 9, 10, and 12 to 15, or enable the apparatus to perform the method according to any one of claims 11 to 15, or enable the apparatus to perform the method according to any one of claims 16 to 19 or any one of claims 22 to 24, or enable the apparatus to perform the method according to any one of claims 20 to 24.

27. A computer program product, wherein the computer program product comprises instructions used to perform the method according to any one of claims 1 and 3 to 8, or the computer program product comprises instructions used to perform the method according to any one of claims 2 to 8, or the computer program product comprises instructions used to perform the method according to any one of claims 9, 10, and 12 to 15, or the computer program product comprises instructions used to perform the method according to any one of claims 11 to 15, or the computer program product comprises instructions used to perform the method according to any one of claims 16 to 19 or any one of claims 22 to 24, or the computer program product comprises instructions used to perform the method according to any one of claims 20 to 24.

28. A computer-readable storage medium, wherein the computer-readable storage medium stores a computer program, and when the computer program is run on a computer, the computer is enabled to perform the method according to any one of claims 1 and 3 to 8, or the computer is enabled to perform the method according to any one of claims 2 to 8, or the computer is enabled to perform the method according to any one of claims 9, 10, and 12 to 15, or the computer is enabled to perform the method according to any one of claims 11 to 15, or the computer is enabled to perform the method according to any one of claims 16 to 19 or any one of claims 22 to 24, or the computer is enabled to perform the method according to any one of claims 20 to 24.
